Europäisches Patentamt

European Patent Office

Office européen des brevets

(11) Veröffentlichungsnummer: **0 371 159**
**A1**

## EUROPÄISCHE PATENTANMELDUNG

(21) Anmeldenummer: 88119837.8

(22) Anmeldetag: 28.11.88

(51) Int. Cl.⁵: **F16H 61/28, B60K 41/22**

(43) Veröffentlichungstag der Anmeldung:
06.06.90 Patentblatt 90/23

(84) Benannte Vertragsstaaten:
AT DE FR GB

(71) Anmelder: **Csepel Autogyár**
Pf. 38
H-2311 Szigetszentmiklos(HU)

(72) Erfinder: **Simonyi, Sandor Dr. Dipl.-Ing.**
Salgotarjan Baglyasalja
Petöfi u.59., 3102(HU)
Erfinder: **Töröcsik, Laszlo, Dipl.-Ing.**
Kakukk u. 10/b., 1126
Budapest(HU)
Erfinder: **Toth, Istvan**
Kistarjan u. 8., 3100
Salgotarjan(HU)
Erfinder: **Valoczi, György**
Budapesti u.40., 3104
Salgotarjan(HU)

(74) Vertreter: **Patentanwälte Viering & Jentschura**
Steinsdorfstrasse 6
D-8000 München 22(DE)

(54) **Elektropneumatische Fernschaltvorrichtung, insbesondere zum Schalten eines synchronisierten mechanischen Wechselgetriebes von Kraftfahrzeugen.**

(57) Die Erfindung bezieht sich auf eine elektropneumatische Fernschaltvorrichtung, insbesondere zur Schaltung der Gangstufen des synchronisierten mechanischen Wechselgetriebes von Kraftfahrzeugen, wobei mit dem Stufenwechselorgan /33/ des Wechselgetriebes /11/ ein in Wahlrichtung /v/ angeordneter pneumatischer Wahlzylinder /34/ und ein in Schaltrichtung /k/ angeordneter Schaltzylinder /35/ in Betätigungsverbindung stehen.

Der erfindungsgemässe elektropneumatische Fernschaltvorrichtung kann dadurch gekennzeichnet werden, dass der Schaltzylinder /35/ in seinen äusseren Stellungen über eine geringere und eine grössere Druckkraftstufe verfügt, weiterhin in der Fernschalteinheit /7, 56/ in Wahlrichtung /v/ so viele Signalgeber /EV12, EV34, EV56, EVR/ angeordnet sind, wie die Anzahl der Schaltstrassen /1-2ˣ, 3-4ˣ, 5-6ˣ, Rˣ/ ist, und in Schaltrichtung /k/ mindestens symmetrisch zur Mittelstellung je zwei Signalgeber /64, EKK1, EKS1, EKS2, EKK2/ angeordnet sind, von denen die der Mittelstellung näher liegenden Signalgeber /64, EKS1, EKS2/ mit den in den äusseren Stellungen des Schaltzylinders /35/ geringere Druckkraftstufe zustandebringenden Ventilen /SK0-SK1, SK0-SK2/ in Steuerungsverbindung stehen und die von der Mittelstellung ferner liegenden Signalgeber /64, EKK1, EKK2/ mit den in den äusseren Stellungen des Schaltzylinders /35/ grössere Druckkraftstufe zustandebringenden Ventilen /SK1, SK2/ in Steuerungsverbindung stehen, weiterhin der Schaltzylinder /35/ mit mindestens je einem, die Endstellung signalisierenden Signalgeber /P1, P2, ES0/ versehen ist, und schliesslich in der Fernschalteinheit /7, 56/ der Fernschalthebel /12, 58/ mit einer mittels Hilfsenergie betätigten Brems-Befestigungskonstruktion /F/ in Zwangsverbindung steht, wobei mit der Brems-Befestigungskonstruktion /F/ die in der Fernschalteinheit /7, 56/ in Schaltrichtung /k/ angeordneten Signalgeber /18, EK1, EK2, 64, EKK1, EKS1, EKS2, EKK2/ und die die Endstellung des Schaltzylinders /35/ signalisierenden Signalgeber /P1, P2, ES0/ in Steuerungsverbindung stehen.

## ELEKTROPNEUMATISCHE FERNSCHALTVORRICHTUNG, INSBESONDERE ZUR SCHALTUNG DER GANGSTUFEN DES SYNCHRONISIERTEN MECHANISCHEN WECHSELGETRIEBES VON KRAFTFAHRZEUGEN

Die Erfindung bezieht sich auf eine Fernschaltvorrichtung, mit deren Hilfe der Fahrzeugfahrer - mit der Illusion der Handbetätigung des traditionellen Schalthebels - fehlerfrei fähig ist, die Schaltung der Gangstufen bei dem von ihm entfernt angeordneten synchronisierten mechanischen Wechselgetriebe durchzuführen.

Es ist bekannt, dass bei einem Teil der Kraftfahrzeuge, in erster Reihe bei den Kraftfahrzeugen mit Heckmotor, oder bei verschiedenen Arbeitsmaschinen das Wechselgetriebe vom Fahrzeugfahrer entfernt angeordnet ist, so dass das Stufenwechselorgan des Wechselgetriebes mittels unmittelbarer Handbetätigung nicht betätigt werden kann. Geringere Entfernungen können mit einem Gestängemechanismus oder Bowdenkabel überbrückt werden, aber bei derartigen, mit Gelenk aufgebauten Kraftfahrzeugen oder Arbeitsmaschinen, wo der Fahrzeugfahrer auf dem einen Gelenkglied sitzt und das Wechselgetriebe am anderen Gelenk angeordnet ist, können diese Lösungen nicht mehr verwendet werden.

Zur Lösung des Problems sind hydraulische und pneumatische Systeme ausgearbeitet worden. Das Wesen der hydraulischen Systeme besteht darin, dass der Fahrzeugfahrer mit Hilfe des Schalthebels in zueinander senkrechten Zylindern Kolben bewegt und durch die aus den Zylindern auf diese Weise ausgedrückte Hydraulikflüssigkeit sind die Kolben der mit dem Stufenwechselorgan des Wechselgetriebes verbundenen Arbeitszylinder betätigt. Derartige Lösungen sind aus den DE-OS 25 10 392, DE-OS 27 00 837, DE-OS 29 35 377 und HU-PS 192.487 kennenzulernen. Die hydraulischen Systeme basieren also auf dem Prinzip der unmittelbaren Kräfteübertragung, und so muss der Fahrzeugfahrer infolge der Flüssigkeitsreibung bei grösseren Entfernungen eine verhältnismässig grosse Kraft ausüben.

Bei den oben erwähnten Lösungen erfolgte eine einfache Kräfte- und Bewegungsübertragung, so konnte der Fahrzeugfahrer den Schalthebel auf dieselbe Weise bewegen, als müsste er einen traditionellen Schalthebel behandeln.

Bei den pneumatischen Systemen ist das Stufenwechselorgan des Wechselgetriebes mit der Kolbenstange des in Schaltrichtung und Wahlrichtung angeordneten Schaltzylinders bzw. Wahlzylinders verbunden. Der Schaltzylinder und der Wahlzylinder sind durch Ventile am Pressluftsystem des Kraftfahrzeuges angeschlossen. Der Fahrzeugfahrer behandelt diese Ventile auf mechanischem Wege oder durch elektrische Steuerung.

Bei einem Teil der pneumatischen Systeme soll der Fahrzeugfahrer zur elektrischen Steuerung nur Schaltknöpfe drücken oder einen, bei automatischen Wechselgetrieben üblichen Kontrollerarm ziehen. Wenn derartige Systeme einfach sind, sind sie ungenau, es bestehen zahlreiche Fehlermöglichkeiten des Fahrzeugfahrers, weiterhin geht das Wechselgetriebe sehr vorzeitig zugrunde. Die besseren, zuverlässigeren, schonender funktionierenden Systeme sind hingegen sehr kompliziert. Aus diesem Grund hat sich die Entwicklung gegen derartige Systeme verschoben, die in jedwelchem Mass die Bedienung des traditionellen Schalthebels simulieren.

Ein derartiges elektropneumatisches System ist in der HU-PS 187.345 beschrieben. Bei dieser Lösung ist neben dem Fahrzeugfahrer eine derartige Fernschalteinheit eingebaut, deren Fernschalthebel durch den Fahrzeugfahrer dem traditionellen Schaltbild entsprechend bewegt ist. Der Fernschalthebel betätigt in seiner, jeder Gangstufe entsprechenden Stellung je einen elektrischen Schalter, und diese Schalter schalten den Elektromagnet derjenigen Ventile ein, die den das Stufenwechselorgan bewegenden pneumatischen Schaltzylinder und Wahlzylinder steuern. Dieses System informiert den Fahrzeugfahrer über den Verlauf der Schaltung der Gangstufe nicht, höchsten ist das Ende dieses Verlaufes durch eine Signallampe signalisiert. Da die pneumatischen Arbeitszylinder zu hart funktionieren, sind vor ihnen Drosselventile zwischengebaut, aber auch so sind sie nur zu derartigen Wechselgetrieben empfohlen, die durch einen hydrodynamischen Momentwandler mit dem Motor verbunden sind.

Die aus der DE-OS 31 38 827 erkennbare Fernschalteinheit ist bei im wesentlichen derartigen Systemen verwendbar. Hier sind anstatt elektrische Schalter Magnete und Sensoren entsprechender Anzahl angeordnet, und zwar derart, dass den einzelnen Stellungen des Fernschalthebels eine gegebene Signalkombination entspricht.

Ähnliche Zielsetzung hat die in der US-PS 4.646.582 beschriebene Fernschalteinheit. Diese ist sicherheitsvoller als die vorangehende Lösung, weil sie mittels eines durch Feder belasteten Kugelorientierer in ihrer jeweiligen eingestellten Stellung befestigt ist, weiterhin eine pneumatisch betätigte Konstruktion hat, die den Fernschalthebel solange in Mittelstellung hält, bis die Bedingungen zur Stufenschaltung des Wechselgetriebes bei dem Stufenwechselorgan nicht erfüllt sind.

Die Fehlermöglichkeit des Fahrzeugfahrers ist gut ausgeschlossen und auch die Betätigung des Stufenwechselorgans ist schonender durchgeführt durch die Fernschaltvorrichtung laut der US-PS 4.516.669. Die Einschaltung der Gangstufe kann nur im aufgelösten Zustand des Wechselgetriebes durchgeführt werden und das Wechselgetriebe kann nur geschlossen werden, wenn die Schaltung regelmässig beendet worden ist.

Aus der US-PS 4.633.987 ist eine rein pneumatisch gesteuerte Fernschaltvorrichtung kennenzulernen. Auch diese kann nur im aufgelösten Zustand des Wechselgetriebes be tätigt werden, und der Fernschalthebel kann nur dann in der Schaltstrasse in seine äussere Stellung geschoben werden, wenn die Schaltung beendet worden ist. Dafür sorgen pneumatische Zylinder.

Eine den Anforderungen am meisten entsprechende Lösung ist in der US-PS 4.646.870 beschrieben. Diese ist eine elektropneumatische Fernschaltvorrichtung, bei der sowohl die Bewegungen des Fernschalthebels als auch die Bewegungen des Stufenwechselorgans des Wechselgetriebes durch analoge Signalgeber, und zwar Potentiometer signalisiert sind. Auch bei dieser Vorrichtung ist durch einen pneumatischen Arbeitszylinder die Schiebung des Fernschalthebels in äussere Stellung vor Beendigung der Stufenschaltung verhindert.

Wie es ersichtlich ist, erfüllen die Fernschaltvorrichtungen auch heute mehrere Bedingungen, doch können sie nicht als vollkommen betrachtet werden. Es ist bekannt, dass die Einschaltung der Gangstufe bei synchronisierten Wechselgetrieben in zwei Schritten erfolgt. Erst tritt die Synchronkonstruktion ein, und erst nach dem Synchronisieren erfolgt die tatsächliche Schaltung. Die Synchronisierung erfordert weniger, die Schaltung mehr Kraft. Der Fahrzeugfahrer fühlt diese zwei Schritte am traditionellen Schalthebel. Das ist die wichtigste Bedingung der schonenden Stufenschaltung, und eben das fehlt bei den bisherigen Lösungen.

Zielsetzung unserer Erfindung ist also eine elektropneumatische Fernschaltvorrichtung zu schaffen, die für das Wechselgetriebe die Schalthebelbehandlung des sorg fältigen Fahrzeugfahrers vollständig simuliert, und für den Fahrzeugfahrer den Verlauf der Stufenschaltung vollständig simuliert.

Unsere Erfindung basiert auf der Erkenntnis, dass mit Hilfe von entsprechendem pneumatischem Arbeitszylinder oder entsprechenden pneumatischen Armaturen die während der Stufenschaltung erforderliche Kraft zweier Grössen zustandegebracht werden kann. Zugleich kann die Bewegung des Fernschalthebels mit Hilfe von Signalgebern entsprechender Anzahl und einer Brems-Befestigungskonstruktion hinsichtlich Mass der Bewegung und der zur Bewegung erforderlichen Kraft derart geregelt werden, wie sich der traditionelle Schalthebel bewegt.

Die Erfindung bezieht sich also auf eine elektropneumatische Fernschaltvorrichtung, insbesondere zur Schaltung der Gangstufen des synchronisierten mechanischen Wechselgetriebes von Kraftfahrzeugen, wobei mit dem Stufenwechselorgan des Wechselgetriebes ein in Wahlrichtung angeordneter pneumatischer Wahlzylinder mit, der Anzahl der Schaltstrassen entsprechender Stellunganzahl und ein in Schaltrichtung angeordneter, über drei Stellungen verfügender Schaltzylinder in Betätigungsverbindung stehen, und der Wahlzylinder und der Schaltzylinder mittels durch Elektromagnet betätigten Ventilen an der Pressluftquelle angeschlossen sind, weiterhin verfügt die elektropneumatische Fernschaltvorrichtung über eine durch den Fahrzeugfahrer bediente Fernschalteinheit mit einem Fernschalthebel mit, dem Schaltbild des Wechselgetriebes entsprechenden Stellungen, welcher mit in Wahlrichtung und Schaltrichtung angeordneten Signalgebern in Betätigungsverbindung steht, und diese durch eine Steuereinheit mit den durch Elektromagnet betätigten Ventilen verbunden sind. Die Vorrichtung kann dadurch gekennzeichnet werden, dass der Schaltzylinder in seinen äusseren Stellungen über eine geringere und eine grössere Druckkraftstufe verfügt; dass in der Fernschalteinheit in Wahlrichtung so viele Signalgeber angeordnet sind, wie viel die Anzahl der Schaltstrassen ist; dass in Schaltrichtung mindestens im Vergleich zur Mittelstellung symmetrisch je zwei Signalgeber angeordnet sind, von denen die der Mittelstellung näher liegenden Signalgeber mit in den äusseren Stellungen des Schaltzylinders geringere Druckkraftstufe zustandebringenden Ventilen in Steuerungsverbindung stehen, und die von der Mittelstellung ferner liegenden Signalgeber mit in den äusseren Stellung des Schaltzylinders grössere Druckkraftstufe zustandebringenden Ventilen in Steuerungsverbindung stehen; dass der Schaltzylinder über mindestens je einem die Endstellung signalisierenden Signalgeber verfügt; dass in der Fernschalteinheit der Fernschalthebel mit einer mittels Hilfsenergie betätigten Brems-Befestigungskonstruktion in Zwangsverbindung steht, und mit der Brems-Befestigungskonstruktion die in der Fernschalteinheit in Schaltrichtung angeordneten Signalgeber und die die Endstellung des Schaltzylinders signalisierenden Signalgeber in Steuerungsverbindung stehen.

Bei einer bevorzugten Ausführungsform der erfindungsgemässen Vorrichtung sind die in der Fernschalteinheit in Schaltrichtung angeordneten Signalgeber Öffnungen, zweckmässig Spalten, die in einer, mit dem Fernschalthebel in Betätigungsverbindung stehenden Signalgebereinheit ausgebildet sind, und die Bewegungsbahnen der Öffnungen, zweckmässig Spalten fallen zusammen und in dieser Bewegungsbahn ist mindestens ein, auf Lichtwirkung elektrische Signale erzeugender Fühler vor den Öffnungen angeordnet, der Sichtbereich der Fühler ist im Vergleich zueinander zweckmässig um das 0,5-1-fache des Sichtbereiches verschoben, mit dem Fernschalthebel steht eine weitere Signalgebereinheit in Betätigungsverbindung, in welcher eine einzige Öffnung, zweckmässig Spalte ausgebildet ist, vor welcher ein in der Mittelstellung des Schalthebels auf Lichtwirkung elektrische Signale erzeugender Fühler angeordnet ist.

Bei einer weiteren bevorzugten Ausführungsform der erfindungsgemässen Vorrichtung ist die mit dem Fernschalthebel in Betätigungsverbindung stehende, mit mehreren Öffnungen ausgebildete Signalgebereinheit und die mit einer Öffnung ausgebildete Signalgebereinheit aus einem Stück ausgebildet, und die Bewegungsbahn dieser letzterwähnten einzigen Öffnung fällt ausserhalb der Bewegungsbahn der anderen Öffnungen.

Eine dritte bevorzugte Ausführungsform der erfindungsgemässen Vorrichtung ist derart ausgebildet, dass die mit dem Fenrschalthebel in Betätigungsverbindung stehende Signalgebereinheit mindestens so lang ist wie der Abstand zwischen den zwei äusseren Stellungen, sie ist in der ganzen Länge mit Öffnungen versehen, deren Breite mit der Breite des Sichtbereiches des Fühlers übereinstimmt und deren Teilung das Doppelte des Sichtbereiches des Fühlers ist, und die in der Bewegungsbahn dieser Öffnungen angeordneten zwei Fühler sind mit einer, Zählungsaufgabe durchführenden Untereinheit der Steuereinheit in signalübertragender Verbindung.

Bei einer vierten bevorzugten Ausführungsform der erfindungsgemässen Vorrichtung besteht die Brems-Befestigungskonstruktion der Fernschalteinheit aus einer mit dem Fernschalthebel in Schaltrichtung in Zwangsverbindung stehenden Schleife, weiterhin aus dem Elektromagnet mit zur Reibfläche der Schleife senkrechter Wirkungslinie, oder aus pneumatischem Arbeitszylinder oder hydraulischem Arbeitszylinder, und die durch den Elektromagnet, den pneumatischen Arbeitszylinder oder den hydraulischen Arbeitszylinder an der Reibfläche der Schleife erzeugte Reibkraft ist geringer als die aus der am Fernschalthebel auf die Schleife ausgeübten Handkraft auswirkende Kraft.

Bei einer fünften bevorzugten Ausführungsform der erfindungsgemässen Vorrichtung sind an der Schleife der Brems-Befestigungskonstruktion der Fernschalteinheit zwei Anstossflächen ausgebildet, zwischen welchen der Fernschalthebel oder der damit in Zwangsverbindung stehende Anschlag angeordnet ist, und der Abstand zwischen den Anstossflächen ist grösser als die Abmessung des Fernschalthebels oder des Anschlags zwischen den Anstoss flächen, weiterhin ist der Fernschalthebel oder der Anschlag in Richtung der Anstossflächen mit zwei Federn gleicher Federkraft an der Schleife ausgestützt.

Eine sechste bevorzugte Ausführungsform der erfindungsgemässen Vorrichtung ist derart ausgebildet, dass die die Mittelstellung des Schaltzylinders zustandebringenden aktiven Kolbenflächen geringer sind als die die äussere Stellung zustandebringenden aktiven Kolbenflächen.

Bei einer siebten bevorzugten Ausführungsform der erfindungsgemässen Vorrichtung ist zwischen demjenigen Ventil, das den die Mittelstellung des Schaltzylinders zustandebringenden Zylinderraum mit Pressluft versorgt und der Pressluftquelle ein Druckminderer angeordnet.

Bei einer achten bevorzugten Auführungsform der erfindungsgemässen Vorrichtung ist bei Mittelstellung jeder Zylinderraum des Schaltzylinders mit der Pressluftquelle verbunden.

Eine weitere bevorzugte Ausführungsform der erfindungsgemässen Vorrichtung ist derart ausgebildet, dass die Kolbenstange des Schaltzylinders mit einem Signalgeber in Zwangsverbindung steht, der in dessen Bewegungsrichtung drei Strecken hat, und von den drei Strecken die Höhe der mittleren Strecke von der Höhe der zwei anderen Strecken abweichend ist, weiterhin ist bei dem Signalgeber ein Fühler angeordnet und in mindestens je einer äusseren Stellung des Schaltzylinders ist je eine äussere Strecke des Signalgebers vor dem Fühler.

Schliesslich ist eine bevorzugte Ausführungsform der erfindungsgemässe Vorrichtung derart ausgebildet, dass jeder Stellung des Wahlzylinders ein Signalgeber zugeordnet ist, und von diesen vorerwähnten Signalgebern und von den in der Fernschalteinheit in Wahlrichtung angeordneten Signalgebern die zur gleichen Schaltstrasse gehörenden Signalgeber miteinander in einer die Schaltung der Gangstufe zulassenden Verbindung stehen.

Die Erfindung wird nachstehend anhand einiger Ausführungsbeispiele mit Hilfe der beiliegenden Zeichnungen näher erläutert. Es zeigen

Fig. 1 - die Skizze der Verbindung der Einheite der Fernschaltvorrichtung,

Figuren 2 und 3 - die eine Fernschalteinheit in zwei Schnitten,

Fig. 4 - das Schaltbild der Fernschalteinheit,

Fig. 5 - die Signalgebereinheit der Fernschalteinheit im Schnitt III nach Fig. 2,

Fig. 6 - die Fernschalteinheit im Teilschnitt IV nach Fig. 2,

Fig. 7 - eine mögliche Ausbildung des Schaltzylinders in Längsschnitt,

Fig. 8 - die Skizze des Aufbaus der Steuereinheit,

Fig. 9 - das Schaltbild der richtungsfühlenden Untereinheit,

Fig. 10 - das Schaltbild der vorwärts und rückwärts zählenden Untereinheit,

Fig. 11 - das Schaltbild der den Absolutwert erzeugenden und vergleichenden Untereinheit,

Fig. 12 - das Schaltbild der die Bewegung in Schaltrichtung steuernden Untereinheit,

Fig. 13 - das Schaltbild der die Stellung in Wahlrichtung vergleichenden Untereinheit,

Fig. 14 - das Schaltbild der die Bewegung in Wahlrichtung steuernden Untereinheit,

Fig. 15 - das Schaltbild der den Elektromagnet steuernden Untereinheit,

Fig. 16 - eine weitere Variante der Signalgebereinheit der Fernschalteinheit,

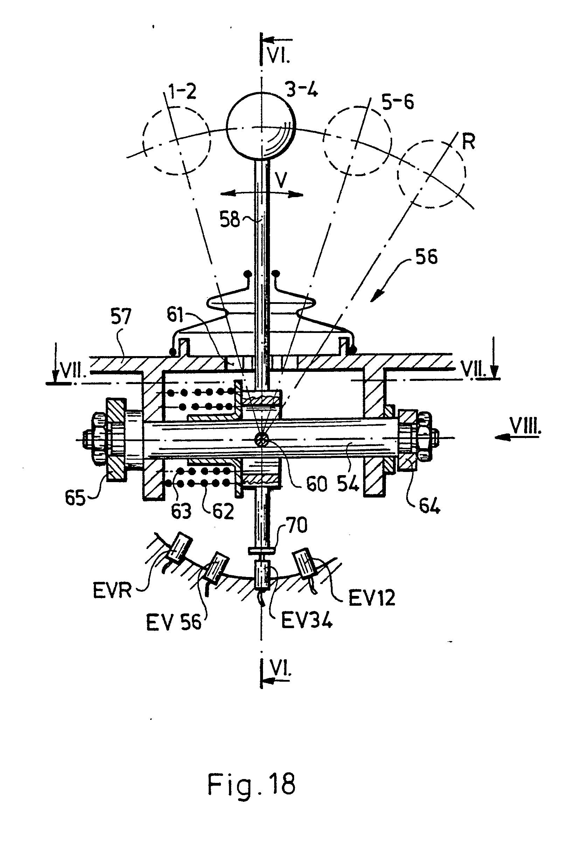

Figuren 17 bis 19 - eine weitere Fernschalteinheit in drei Schnitten,

Fig. 20 - die in Schaltrichtung angeordneten Signalgeber der Fernschalteinheit,

Fig. 21 - eine mögliche Variante der Brems-Befestigungskonstruktion.

Wie bei den elektropneumatischen Systemen im allgemeinen, so sind auch bei der Fernschaltung des Wechselgetriebes drei wichtige Einheite erforderlich, nämlich die Fernschalteinheit, die am Wechselgetriebe aufgebauten durchführenden Armaturen und die zwischen den beiden vorangehend erwähnten Einheiten eine Verbindung zustandebringende Steuereinheit. Diese können selbständig entwickelt und aufgebaut werden, sind nicht einander untergeordnet, in ihrer Verbindung soll man nur auf den rationalen Zusammenklang achten.

Zur Erleichterung unserer Arbeit beschreiben wir unsere Erfindung erst mit der ausführlichen Bekanntmachung derjenigen Fernschaltvorrichtung, die wir tatsächlich gebaut haben. Wir müssen also betonen, dass jedes einzelne Element der im weiteren zu beschreibenden Vorrichtung mit Elementen anderer Ausbildung ersetzt werden kann. Das werden wir mit weiteren Ausführungsbeispielen dem Bedarf entsprechend auch illustrieren.

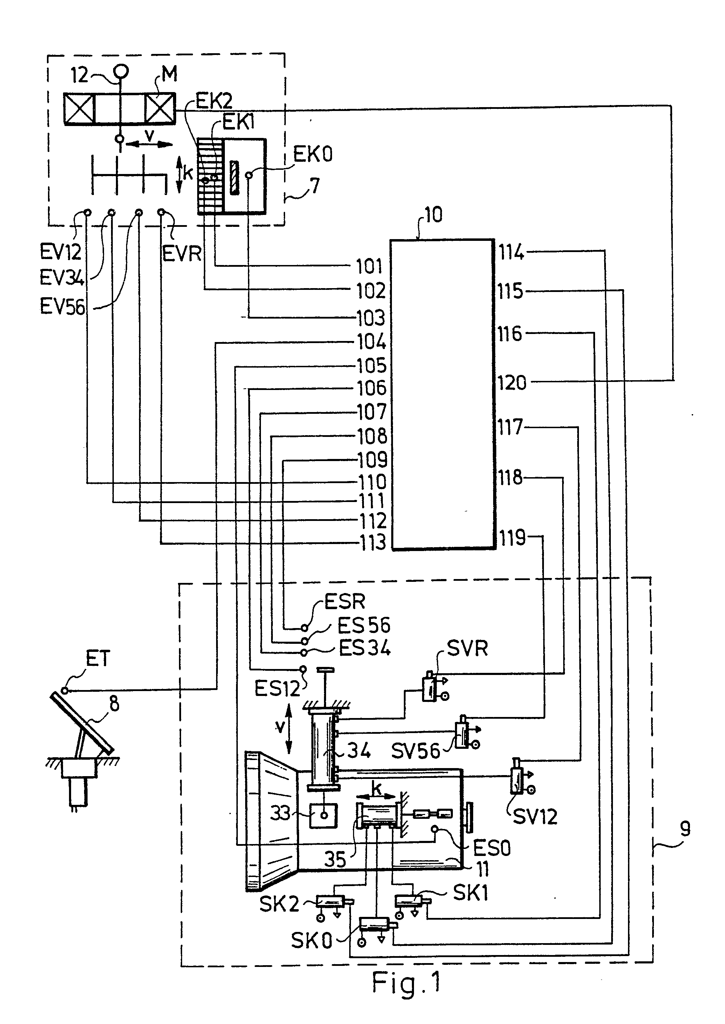

In Fig. 1 sind die Einheite der Fernschaltvorrichtung des Wechselgetriebes dargestellt. Diese Fernschaltvorrichtung wurde zur Fernschaltung eines derartigen Wechselgetriebes 11 ausgebildet, welches hinsichtlich seines Aufbaus ein synchronisiertes mechanisches Wechselgetriebe mit sechs Vorwärts- und einer Rückgangstufe ist.

Am Wechselgetriebe 11 ist die Stufenwechseleinheit 9 aufgebaut, die durch die Steuereinheit 10 mit der Fernschalteinheit 7 verbunden ist. Mit diesen Einheiten ist -auf die in Fig. 1 dargestellte Weise - auch das Kupplungspedal 8 in Verbindung. Wir werden die Rolle des Kupplungspedals später beschreiben, aber müssen bereits jetzt betonen, dass es zur Verwirklichung der Erfindung nicht unentbehrlich ist.

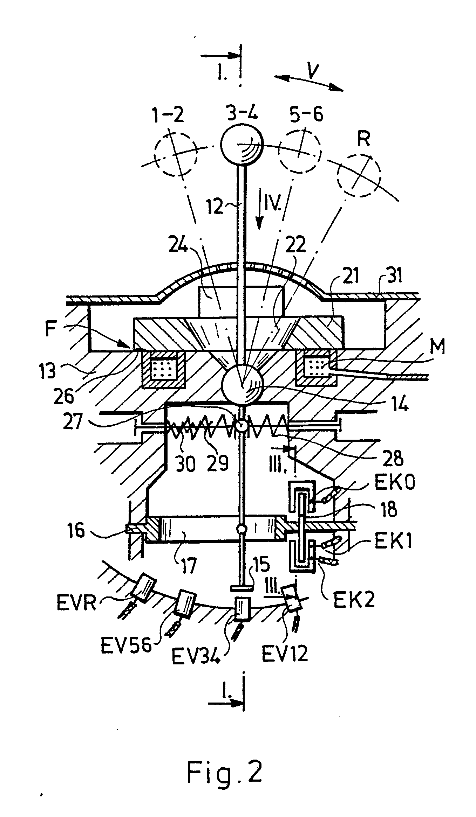

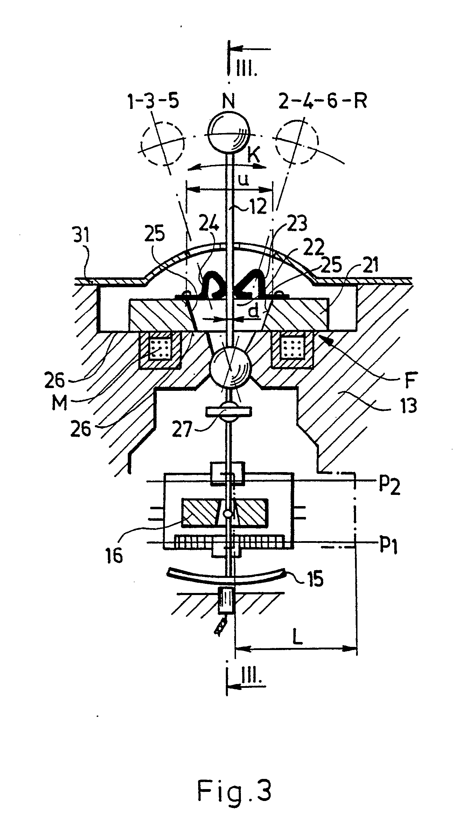

Die Fernschalteinheit 7 ist aufgrund der Figuren 2 bis 6 ausführlicher zu erkennen.

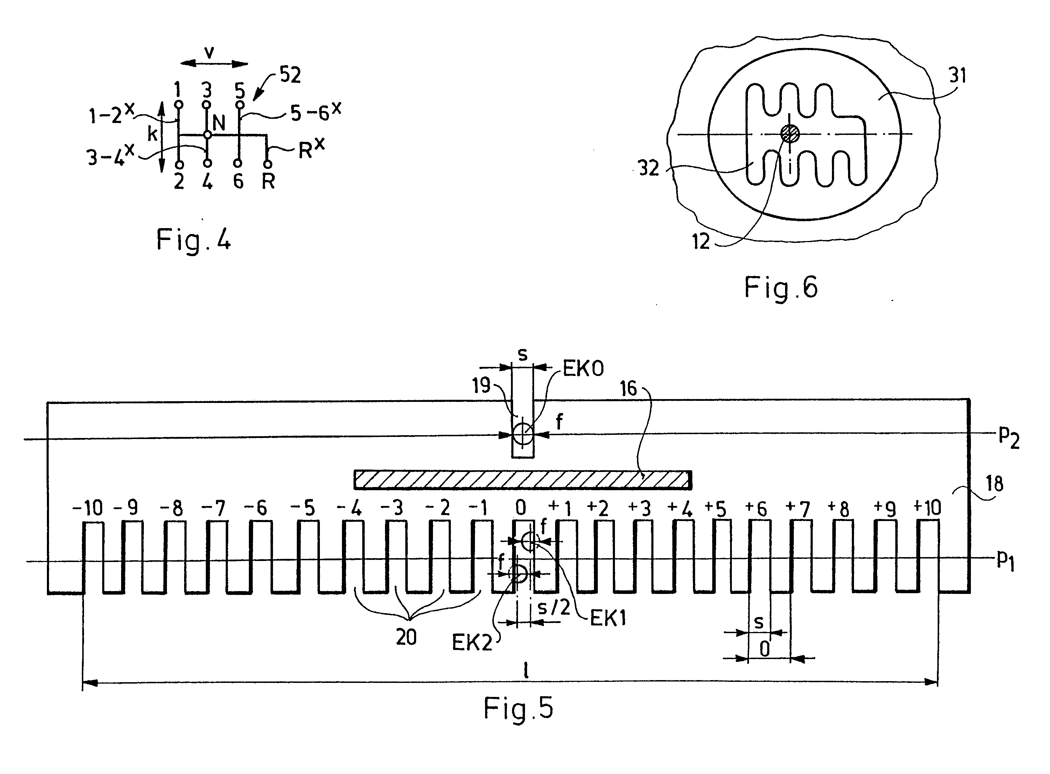

Der Fernschalthebel 12 - der die Funktion des normalen Schalthebels erfüllt - kann laut dem Schaltbild 52 in Fig. 4 im Gehäuse 13 der Fernschalteinheit mit Hilfe eines Kugelgelenkes 14 verdreht werden. Das Schaltbild 52 ist von der üblichen doppelten H-Form, mit den der Schaltung der Gangstufen entsprechenden Schaltstrassen 1-2$^x$, 3-4$^x$, 5-6$^x$ und R$^x$. In den zwei Enden der Schaltstrasse 1-2$^x$ ist die den Gangstufen 1 und 2 entsprechende Fernschalthebelstellung, in den zwei Enden der Schaltstrasse 3-4$^x$ ist die den Gangstufen 3 und 4 entsprechende Fernschalthebelstellung, in den zwei Enden der Schaltstrasse 5-6$^x$ ist die den Gangstufen 5 und 6 entsprechende Fernschalthebelstellung, und in der Schaltstrasse R$^x$ ist die der Rückgangstufe R entsprechende Fernschalthebelstellung. Die neutrale Stellung N ist bei der Schaltstrasse 3-4$^x$.

Die Steuereinheit 10 wird über die jeweilige Stellung des Fernschalthebels 12 durch Signalgeber informiert. In Wahlrichtung v ist der Schaltstrasse 1-2$^x$ entsprechend der Fühler EV12, der Schaltstrasse 3-4$^x$ entsprechend der Fühler EV34, der Schaltstrasse 5-6$^x$ entsprechend der Fühler EV56, und schliesslich der Schaltstrasse R$^x$ entsprechend der Fühler EVR im unteren Teil des Gehäuses 13 in der Ebene der Bewegung des Fernschalthebels 12 in Wahlrichtung v angeordnet. Die Fühler EV12, EV34, EV56 und EVR sind induktive Fühler. Am unteren Ende des Fernschalthebels 12 ist eine bogenförmige Platte 15 befestigt, die auch im Falle einer Bewegung des Fernschalthebels 12 in Schaltrichtung k jedwelchen der Fühler immer abdeckt. In Wahlrichtung v sind also die Fühler EV12, EV34, EV56 und EVR die Signalgeber, die in der Wirklichkeit mit der Platte 15 zusammen das nötige Signal erzeugen.

Die Signalisierung der Stellung des Fernschalthebels 12 in Schaltrichtung k ist eine mehr zusammengesetzte Aufgabe, so ist auch die diese durchführende Konstruktion mehr kompliziert.

Im Gehäuse 13 ist am Teil zwischen dem Kugelgelenk 14 und der Platte 15 eine Kulisse 16 derart angeführt, dass sie in Schaltrichtung k verschiebbar ist. In der Kulisse 16 ist eine Leitung 17 ausgebildet, in welcher der Fernschalthebel 12 in Wahlrichtung v sich frei bewegen kann, aber in Schaltrichtung k nicht.

Am einen Ende der Kulisse 16 ist eine Signalgebereinheit 18 befestigt, die in Fig. 5 stärker vergrössert dargestellt ist. Das ist eigentlich eine Platte, deren Ebene mit der Bewegung in Schaltrichtung k parallel ist und deren längere Kanten in die Schaltrichtung k fallen. In der einen Längskante sind einundzwanzig Stück Spalten 20 gleicher Breite s mit einer Teilung o eingeschnitten. Die Teilung o ist das Doppelte der Breite s. Diese Spalten 20 sind in Fig. 5 zwecks einfacher Verständnis nach rechts und links von der mittleren Reihennummer 0 mit Reihennummern +1 bis +10, bzw. -1 bis -10 versehen. Die Bewegungsbahn p1 dieser Spalten 20 fallen sinngemäss mit der Bewegung in Schaltrichtung k zusammen und sind ebenfalls parallel damit. Die Länge l des mit den Spalten 20 versehenen Teiles der Signalgebereinheit 18 ist mit dem Abstand L zwischen den zwei äusseren Stellungen der Signalgebereinheit 18 identisch.

In der anderen Längskante der Signalgebereinheit 18 ist eine einzige Spalte 19 von Breite s ausgebildet. Deren Bewegungsbahn p2 fällt ausserhalb der Bewegungsbahn p1, aber ist offenbar parallel damit.

Die Fühler EK0, EK1 und EK2 dienen der Fühlung der Bewegung der Signalgebereinheit 18. Diese Fühler sind hinsichtlich ihrer Ausbildung auf Lichtwirkung Signale erzeugende Fühler, mit anderem Namen Optotore, deren Sichtbereich f mit der Breite s der Spalten 19 bzw. 20 identisch ist.

Der Fühler EK0 ist in der Bewegungsbahn p2 der Spalte 19, und die Fühler EK1 und EK2 sind in der Bewegungsbahn p1 der Spalten 20 entlang angeordnet. Die Fühler EK1 und EK2 sind im Vergleich zueinander in einem Abstand von einer halben Spaltenbreite s/2 verschoben.

Die Signalgebereinheit 18 und die Fühler EK0, EK1 und EK2 gemeinsam bilden die Signalgeber in Schaltrichtung k.

In der oberen horizontalen Ebene des Gehäuses 13 ist eine Schleife 21 aus Weicheisen angeordnet. In der Schleife 21 ist in Wahlrichtung v eine längliche Spalte 22 ausgebildet, in der in Wahlrichtung v der Fernschalthebel 12 sich ohne Hindernis bewegen kann. Die Seitenflächen der Spalte 22 sind als Anstossflächen 25 ausgebildet, und ihr Abstand u voneinander ist um einige mm grösser als die hier messbare Abmessung d des Fernschalthebels 12.

Oben an der Schleife 21 ist der Fernschalthebel 12 durch je eine, aus breitem Blech gleicher Abmessung gebogene Feder 23 und 24 mit der Wahlrichtung v parallel umnommen und im Vergleich zur Schleife 21 in Mittelstellung gehalten. Die Feder 23 und 24 sind derart breit, dass sie den in Wahlrichtung v an jedwelcher Stelle befindlichen Fernschalthebel 12 immer umnehmen.

Im Gehäuse 13 unterhalb der Schleife 21 ist ein mit dem Kugelgelenk 14 konzentrischer, ringförmiger Elektromagnet M angeordnet, dessen Achse senkrecht zur unteren Reibfläche 26 der Schleife 21 ist. Der Elektromagnet M und die Schleife 21 gemeinsam bilden die Brems-Befestigungskonstruktion F der Fernschalteinheit.

Der Fernschalthebel 12 ist durch Feder in Wahlrichtung v im Vergleich zum Gehäuse 13 in neutraler Stellung N gehalten, bzw. zurückgeleitet. Am Fernschalthebel 12 am Teil unterhalb des Kugelgelenkes 14 ist ein Block 27 angeordnet, dessen Längsachse mit der Schaltrichtung k parallel ist. Am Block 27 sind Spiralfeder 28 und 29 gespannt, die sich mit ihren anderen Enden am Gehäuse 13 anstützen. Innerhalb der Spiralfeder 29 ist auch eine kürzere Spiralfeder 30 ausgebildet, welche durch den Block 27 erreicht ist, wenn der Fernschalthebel 12 zur Schaltstrasse 5-6$^x$ verschoben ist. Auch die Spiralfeder 30 ist am Gehäuse 13 angestützt. Diese ist wesentlich stärker als die Spiralfeder 28 und 29, weil sie die zufällige Einschaltung der Rückgangstufe R nur auf diese Weise verhindern kann.

Das Gehäuse 13 ist von oben durch einen Deckel 31 abgeschlossen, in welchem - aus Fig. 6 ersichtlich - die Leitung 32 dem Schaltbild 52 entsprechend ausgebildet ist.

Der Aufbau der Stufenwechseleinheit 9 ist in Fig. 1 gut sichtbar. Das Stufenwechselorgan 33 des Wechselgetriebes 11 ist mit der Kolbenstange eines pneumatisch betätigten Wahlzylinders 34 und eines ebenfalls pneumatisch betätigten Schaltzylinders 35 verbunden.

Der Wahlzylinder 34 ist vierstellig, davon sind drei Stellungen durch Pneumatik, die vierte Stellung, das heisst die Grundstellung durch Feder zustandegebracht. Die ausführlichere Bekanntmachung des Wahlzylinders 34 ist nicht notwendig, der vierstellige Zylinder kann sogar auch aus mehreren zweistelligen pneumatischen Zylindern zusammengebaut werden.

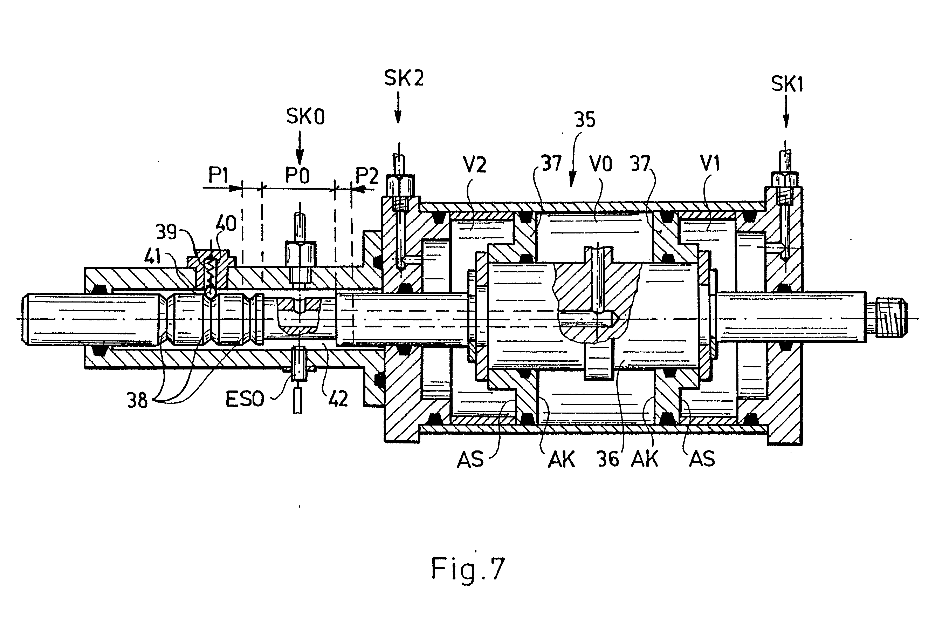

Der Schaltzylinder 35 - wie er in Fig. 7 dargestellt ist - ist dreistellig. An der treppenartig ausgebildeten Kolbenstange 36 sind zwei Schwimmkolben 37 angeordnet. Infolge dessen sind die dem Zylinderraum V0 naheliegenden, die Mittelstellung der Kolbenstange 36 zustandebringenden aktiven Kolbenflächen AK geringer als die den Zylinderräumen V1 und V2 naheliegenden, die äussere Stellung der Kolbenstange 36 zustandebringenden aktiven Kolbenflächen AS. Auf diese Weise verfügt der Schaltzylinder 35 in den äusseren Stellungen der Kolbenstange 36 über zwei Druckkraftstufen abhängig davon, ob nur die die äussere Stellung zustandebringenden Zylinderräume V1 oder V2 oder auch der die Mittelstellung zustandebringende Zylinderraum V0 an der Pressluftquelle angeschlossen sind.

Im Ende der Kolbenstange 36 sind in, den drei Kolbenstellungen entsprechendem Abstand ringförmige Nute 38 ausgebildet, in welche die mit Feder 40 belastete Kugel 41 einer Positionierungskonstruktion 39 einspringt. Selbstverständlich kann auch diese Aufgabe mittels mehreren zweistelligen pneumatischen Zylindern versehen werden.

Sowohl der Wahlzylinder 34 als auch der Schaltzylinder 35 sind an der - nicht dargestellten - Pressluftquelle des Kraftfahrzeuges angeschlossen. Der Wahlzylinder 34 ist durch Ventile SV12, SV56 und SVR, der Schaltzylinder 35 ist durch Ventile SKO, SK1 und SK2 gesteuert. Diese sind hinsichtlich ihrer Ausbildung elektromagnetisch betätigte, zweistellige Dreiwege-Ventile.

Der Fühlung der jeweiligen Stellung des Stufenwechselorgans 33 dienen an der Kolbenstange des Wahlzylinders 34 die Fühler ES12, ES34, ES56 und ESR, am Schaltzylinder 35 der Fühler ES0. Diese sind induktive Fühler.

Die Anordnung und Funktion des Fühlers ES0 ist aufgrund der Fig. 7 ausführlicher erkennbar. An der Kolbenstange 36 ist als Signalgeber eine Strecke P0 und an ihren zwei Seiten Strecken P1 und P2 vorgezeichnet. In der Strecke P0 ist eine Einengung 42 eingeschliffen, so ist deren Höhe von der in den Strecken P1, P2 messbaren Höhe abweichend. Hier ist der Fühler ES0 angeordnet. Die Breite der Einengung 42 ist so dimensioniert, dass in der Mittelstellung der Kolbenstange 36 die Strecke P0, in ihren äusseren Stellungen die Strecke P1 bzw. P2 vor den Fühler ES0 gelangt. Auf diese Weise kann es mit dem einzigen Fühler ES0 signalisiert werden, ob die Kolbenstange 36, oder anders verfasst der Schaltzylinder 35 sich in Mittelstellung oder äusserer Stellung befindet.

Die Verbindung zwischen dem Kupplungspedal 8 und der erfindungsgemässen Vorrichtung ist nicht notwendig. Da wir bei der unserseits verwirklichten Vorrichtung auch diese Verbindung verwenden, ist auch unsere im weiteren zu beschreibende Steuereinheit derart aufgebaut, hier müssen wir uns auch damit beschäftigen. Wir haben auch am Kupplungspedal 8 einen auf induktivem Prinzip funktionierenden Fühler ET angeordnet. Dieser ist derart angeordnet, dass er beim Drücken des Kupplungspedals 8 ein Signal erzeugt.

Die der koordinierten Verbindung der Fernschalteinheit 7 und der Stufenwechseleinheit 9 dienende Steuereinheit 10 wurde mit der Verwendung von elektronischen Elementen ausgebildet. Selbstverständlich kann die Aufgabe auch mit einfachen Relais gelöst werden, aber die Zusammenstellung einer derartigen Steuerung ist kompliziert und von ausserordentlichem Raumbedarf. Man soll auch wissen, dass auch mit der Verwendung von elektronischen Elementen zahlreiche Varianten vorstellbar sind; der hier bekanntgemachte Beispiel ist nur eins von den vielen Beispielen.

Aus Fig. 1 ist es ersichtlich, dass am Eingang 101 der Steuereinheit 10 der Fühler EK1, am Eingang 102 der Fühler EK2, am Eingang 103 der Fühler EK0, am Eingang 104 der Fühler ET, am Eingang 105 der Fühler ES0, am Eingang 106 der Fühler ES12, am Eingang 107 der Fühler ES34, am Eingang 108 der Fühler ES56, am Eingang 109 der Fühler ESR, am Eingang 110 der Fühler EV12, am Eingang 111 der Fühler EV34, am Eingang 112 der Fühler EV56, am Eingang 113 der Fühler EVR, am Ausgang 115 das Ventil SK2, am Ausgang 116 das Ventil SK1, am Ausgang 114 das Ventil SK0, am Stang 117 das Ventil SV12, am Ausgang 118 das Ventil SV56, am Ausgang 119 das Ventil SVR und schliesslich am Ausgang 120 der Elektromagnet M angeschlossen sind.

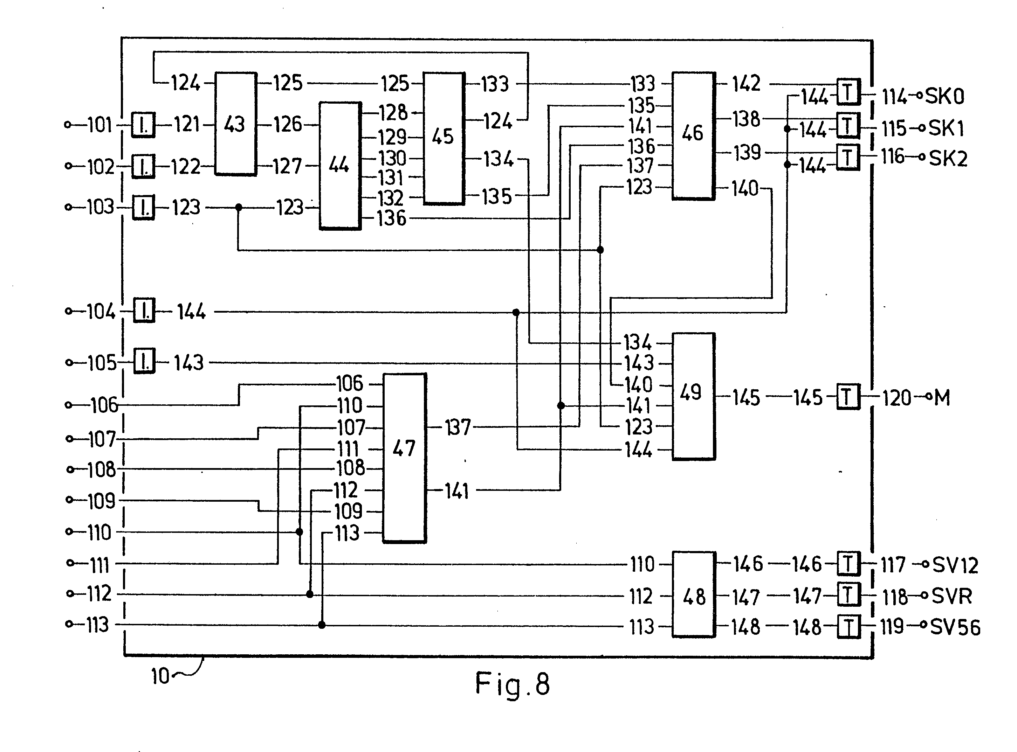

Wir haben die einzelnen Teile der Steuereinheit 10 zwecks besserer Übersicht und leichterer Darstellung in Untereinheite gesondert. Auf diese Weise besteht die Steuereinheit 10 auf in Fig. 8 dargestellte Weise aus einer die Richtung fühlenden Untereinheit 43, einer vorwärts und rückwärts zählenden Untereinheit 44, einer den Absolutwert erzeugenden und vergleichenden Untereinheit 45, einer die Bewegung in Schaltrichtung steuernden Untereinheit 46, einer die Stellung in Wahlrichtung vergleichenden Untereinheit 47, einer die Bewegung in Wahlrichtung steuernden Untereinheit 48 und einer den Elektromagnet steuernden Untereinheit 49, weiterhin aus der Anpassung der Signalebenen dienenden Anpassungsstufen I und aus Leistungsverstärkern T zur Sicherung der Steuerungsebenen.

Am Eingang 121 der richtungsfühlenden Untereinheit 43 sind durch die Anpassungsstufe I der Eingang 101, am Eingang 122 durch die Anpassungsstufe I der Eingang 102, am Eingang 124 der Ausgang 124 der den Absolutwert erzeugenden und vergleichenden Untereinheit 45, der Ausgang 125 am Eingang 125 der den Absolutwert erzeugenden und vergleichenden Untereinheit 45, die Ausgänge 126 und 127 an den Eingängen 126 und 127 der vorwärts-rückwärts zählenden Untereinheit 44 angeschlossen.

Die vorwärts-rückwärts zählende Untereinheit 44 hat über die oben bekanntgemachten Eingänge 126 und 127 hinaus einen Eingang 123, der durch eine Anpassungsstufe I am Eingang 103 angeschlossen ist.

Die Ausgänge 128, 129, 130, 131 und 132 der vorwärts-rückwärts zählenden Untereinheit 44 sind an den Eingängen gleicher Positionnummer der den Absolutwert erzeugenden und vergleichenden Untereinheit 45, ihr Ausgang 136 ist am Eingang 136 der die Bewegung in Schaltrichtung steuernden Untereinheit 46 angeschlossen.

Der Anschluss der Eingänge 128, 129, 130, 131 und 132 der den Absolutwert erzeugenden und vergleichenden Untereinheit 45 ist bereits bekannt, sowohl auch der Anschluss ihres Ausganges 124. Die Ausgänge 133 und 135 sind an den Eingängen gleicher Positionnummer der die Bewegung in Schaltrichtung steuernden Untereinheit 46 angeschlossen, wogegen ihr Ausgang 134 am Eingang gleicher Positionnummer der den Elektromagnet steuernden Untereinheit 49 angeschlossen ist.

Der Anschluss der Eingänge 133, 135 und 136 der die Bewegung in Schaltrichtung steuernden Untereinheit 46 wurde bereits beschrieben. Von ihren weiteren Eingängen sind der Eingang 137 und 141 an den Ausgängen gleicher Positionnummer der die Stellung in Wahlrichtung vergleichenden Untereinheit 47, und ihr Eingang 123 durch die bereits erwähnte Anpassungsstufe I am Eingang 103 angeschlossen. Von ihren Ausgängen is der Ausgang 142 durch einen Leistungsverstärker T am Ausgang 114, der Ausgang 138 durch einen Leistungsverstärker T am Ausgang 115, der Ausgang 139 durch einen Leistungsverstärker T am Ausgang 116, schliesslich der Ausgang 140 am Eingang gleicher Positionnummer der den Elektromagnet steuernden Untereinheit 49 angeschlossen. Die oben erwähnten Leistungsverstärker T sind mit ihrem je einen Eingang 144 durch eine Anpassungsstufe I auch am Eingang 104 angeschlossen.

Die Eingänge 106, 110, 107, 111, 108, 112, 109 und 113 der die Stellung in Wahlrichtung vergleichenden Untereinheit 47 sind an den Eingängen gleicher Positionnummer der Steuereinheit 10 angeschlossen. Der Anschluss des Ausganges 137 wurde bereits beschrieben, der eine Anschluss des Ausganges 141 ebenfalls, darüber hinaus ist der Ausgang 141 auch am Eingang gleicher Positionnummer der den Elektromagnet steuernden Untereinheit 49 angeschlossen.

Die die Bewegung in Wahlrichtung steuernde Untereinheit 48 ist durch ihre Eingänge 110, 112 und 113 mit den Eingängen gleicher Positionnummer der Steuereinheit 10 verbunden, und der Ausgang 146 ist durch einen Leistungsverstärker T am Ausgang 117, der Ausgang 147 ist durch einen Leistungsverstärker T am Ausgang 118 und schliesslich der Ausgang 148 durch einen Leistungsverstärker T am Ausgang 119 angeschlossen.

Von der Verbindung der Eingänge der den Elektromagnet steuernden Untereinheit 49 ist die Verbindung der Eingänge 134, 140 und 141 bereits bekannt. Der Eingang 143 ist durch eine Anpassungsstufe I am Eingang 105, der Eingang 123 ist durch eine Anpassungsstufe I am Eingang 103, der Eingang 144 durch eine Anpassungsstufe I am Eingang 104 angeschlossen. Der einzige Ausgang 145 ist durch einen Leistungsverstärker T am Ausgang 120 angeschlossen.

Innerhalb der den Elektromagnet steuernden Untereinheit 49 sind infolge ihrer besonderen Funktion zwei kleine Teile weiter abzusondern, und zwar der die Einschaltung des Elektromagnets verzögernde Block 50, und der die Auflösung des Elektromagnets tempierende Block 51.

Die Trennung der Steuereinheit in Untereinheite ist -wie das auch aus ihrer Benennung ersichtlich ist - auch in funktionaler Hinsicht rationell, auch die Funktionierung der Steuereinheit 10 ist besser zu erkennen. In der Wirklichkeit haben wir aber die Steuereinheit 10 nicht aus streng abgrenzbaren Untereinheiten aufgebaut. Es kann vorgestellt werden, dass die Untereinheite in einer aus komplizierteren mikroelektronischen Elementen aufgebauten Steuereinheit überhaupt nicht mehr zu erkennen sind und nicht einmal die Funktionierung der Steuereinheit kann mit einer derartigen - im wesentlichen funktionellen - Aufteilung gefolgt werden.

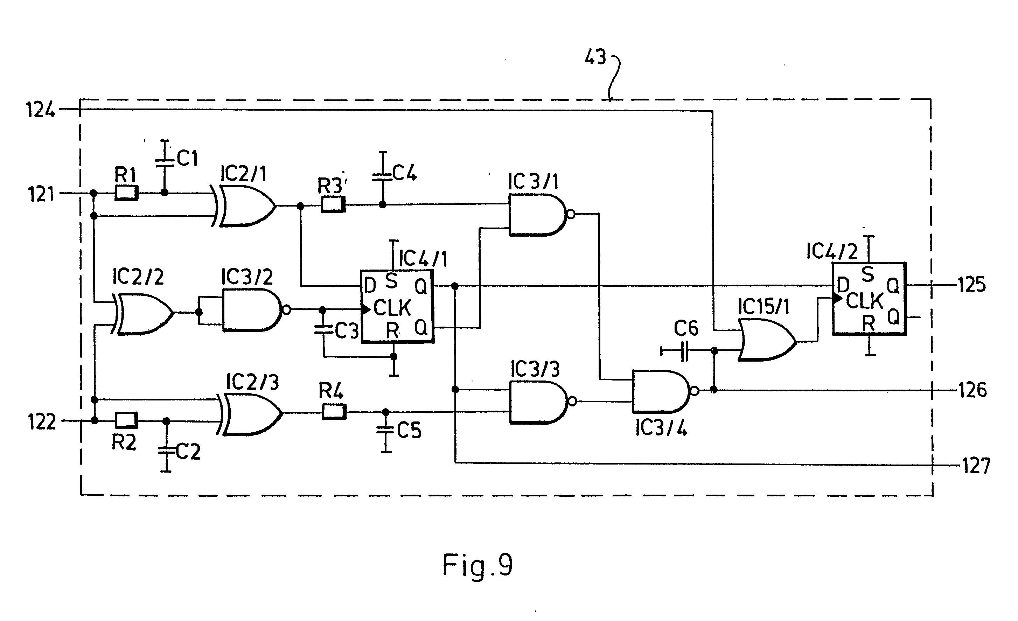

Die Schaltbilder der oben erwähnten Untereinheite sind in Figuren 9 bis 15 dargestellt. Zum Aufbau der Steuereinheit 10 haben wir während der tatsächlichen Verwicklichung auch mehrere derartige elektronische Elemente verwendet, die mehrere Operationseinheite enthalten. Da wir - wie bereits darauf hingewiesen - die Steuereinheit 10 in der Wirklichkeit nicht je Untereinheite aufgebaut haben, können einige elektronische Elemente mit ihrer je einen Operationseinheit in einer oder auch mehreren, unserseits willkürlich abgegrenzten Untereinheiten aufgefunden werden.

Bei der tatsächlichen Verwicklichung haben wir die Steuereinheit 10 - mit den Benennungen des IC-Katalogs des Technischen Verlags - aus den folgenden Elementen aufgebaut: ein Schmidt-Trigger IC1 /CD-40106/, ein vier Operationseinheite IC2/1-IC2/4 enthaltender ausschliessender ODER-Tor IC2 /4030/, ein vier Operationseinheite IC3/1-IC3/4 enthaltender NEIN-UND-Tor IC3 /4011/, ein die Operationseinheite IC4/1-IC4/2 enthaltender Flip-Flop des Typs D IC4 /4013/, je ein vorwärts und rückwärts Zähler IC5 und IC6 /4029/, ein vier Operationseinheite IC7/1-IC7/4 enthaltender ausschliessender ODER-Tor IC7 /4030/, je ein digitaler Komparator mit vier bits IC8 und IC9 /74C85/, ein sechs Operationseinheite IC10/1-IC10/6 enthaltender Negator IC10 /4069/, je ein vier Operationseinheite IC11/1-IC11/4, IC12/1-IC12/4, IC13/1-IC13/4 enthaltender UND-Tor IC11, IC12, IC13 /4081/, eine sechs Operationseinheite IC14/1-IC14/6 enthaltende Antriebsstufe IC14 /4050/ und ein vier Operationseinheite IC15/1-IC15/4 enthaltender ODER-Tor IC15 /4071/. Bei dem Aufbau wurden weiterhin Widerstände R1-R7, Kondensatoren C1-C8 und Dioden D1-D8 /4148/ verwendet.

Der Aufbau der einzelnen Untereinheite ist aufgrund der Figuren 9 bis 15 wie folgt.

Der Eingang 121 der in Fig. 9 dargestellten richtungsfühlenden Untereinheit 43 ist unmittelbar an einem Eingang der Einheit IC2/1 angeschlossen, wogegen an deren anderem Eingang durch den Widerstand R1 angeschlossen. Der gemeinsame Punkt des Widerstandes R1 und der Einheit IC2/1 ist durch den Kondensator C1 am Erdpunkt angeschlossen. Der Eingang 121 ist unmittelbar an einem Eingang der Einheit IC2/3 angeschlossen.

Der Eingang 122 ist unmittelbar an einem Eingang der Einheit IC2/4, wogegen an deren anderem Eingang durch den Widerstand R2 angeschlossen. Der gemeinsame Punkt des Widerstandes R2 und der Einheit IC2/4 ist durch den Kondensator C2 ebenfalls am Erdpunkt angeschlossen. Der Eingang 122 ist unmittelbar am anderen Eingang der Einheit IC2/3 angeschlossen.

Der Ausgang der Einheit IC2/1 ist durch den Widerstand R3 am einen Eingang der Einheit IC3/1 angeschlossen. Der gemeinsame Punkt des Widerstandes R3 und der Einheit IC3/1 ist durch den Kondensator C4 am Erdpunkt angeschlossen. Der Ausgang der Einheit IC2/1 ist unmittelbar mit dem Signaleingang D der Einheit IC4/1 verbunden.

Der Ausgang der Einheit IC2/3 ist mit beiden Eingängen der Einheit IC3/2 verbunden, und der Ausgang der Einheit IC3/2 steht in unmittelbarer Verbindung mit dem Takteingang CLK der Einheit IC4/1 und durch den Kondensator C3 mit dem Reset-Eingang R der Einheit IC4/1 und mit dem Erdpunkt.

Der Set-Eingang S der Einheit IC4/1 ist am Erdpunkt, ihr Ausgang Q ist am Signaleingang D der Einheit IC4/2 und an einem Eingang der Einheit IC3/2, wogegen ihr Ausgang $\overline{Q}$ am anderen Eingang der Einheit IC3/1 angeschlossen. Der Ausgang Q gibt den Ausgang 127.

Der Ausgang der Einheit IC2/4 ist durch den Widerstand R4 am anderen Eingang der Einheit IC3/2 angeschlossen. Der gemeinsame Punkt des Widerstandes R4 und der Einheit IC3/2 ist durch den Kondensator C5 am Erdpunkt angeschlossen.

Der Ausgang der Einheit IC3/1 und der Ausgang der Einheit IC3/2 sind an je einem Eingang der Einheit IC3/4 angeschlossen. Der Ausgang der Einheit IC3/4 gibt einerseits den Ausgang 126, andererseits ist er an einem Eingang der Einheit IC15/2 angeschlossen. Der gemeinsame Punkt des Ausganges der Einheit IC3/4 und des Einganges der Einheit IC15/2 ist durch den Kondensator C6 am Erdpunkt angeschlossen.

Am anderen Eingang der Einheit IC15/2 ist der Eingang 124 angeschlossen, wogegen ihr Ausgang am Takteingang CLK der Einheit IC4/2 angeschlossen ist.

Der Set-Eingang S und der Reset-Eingang R der Einheit IC4/2 sind am Erdpunkt angeschlossen, ihr Ausgang Q gibt den Ausgang 125. Der Ausgang $\overline{Q}$ bleibt frei.

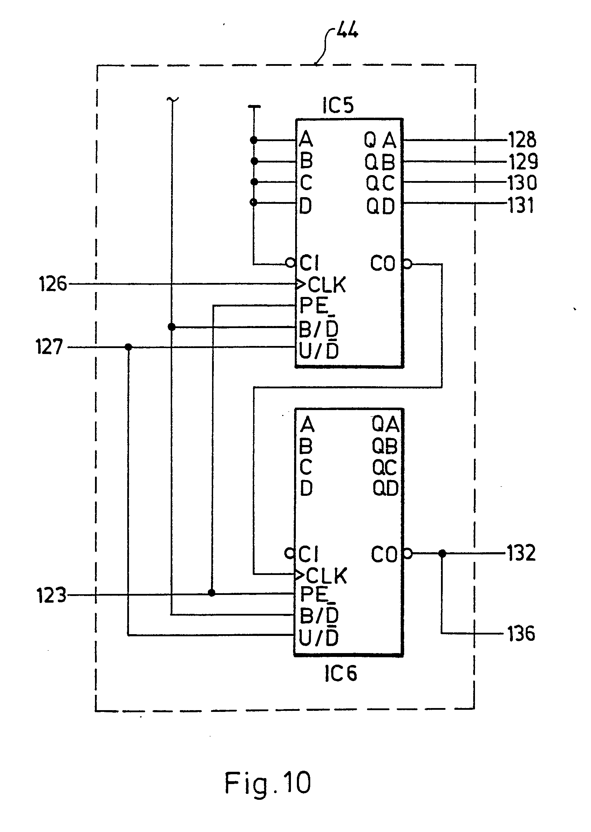

Die. in Fig. 10 dargestellte vorwärts-rückwärts Zähleruntereinheit besteht aus je einem vorwärts-rückwärts Zähler IC5 und IC6.

Die Eingänge A, B, C, D weiterhin der Zulasseingang CI des vorwärts-rückwärts Zählers IC5 sind am Erdpunkt angeschlossen. Sein Takteingang CLK ist am Eingang 126, sein Verboteingang PE ist am Eingang 123, der binär-dezimale Zählereingang B/ $\overline{D}$ ist an der Speisespannung, der auf-unter Zählereingang U/ $\overline{D}$ ist am Eingang 127 angeschlossen. Die Ausgänge QA, QB, QC, QD geben die Ausgänge 128, 129, 130, 131, der den Endwert signalisierende Ausgang C0 ist am Takteingang CLK des vorwärts-rückwärts Zählers IC6 angeschlossen.

Über den oben erwähnten Takteingang CLK des vorwärts- rückwärts Zählers IC6 hinaus ist nur an seinem Verboteingang PE, binär-dezimalen Zählereingang B/ $\overline{D}$ und auf-unter Zählereingang U/ $\overline{D}$ eine Signalquelle angeschlossen, und zwar der Reihe nach der Eingang 123, die Speisespannung und der Eingang 127. Von den Ausgängen ist der den Endwert signalisierende Ausgang C0 der einzige verwendete Ausgang, und zwar dieser gibt die Ausgänge 132 und 136.

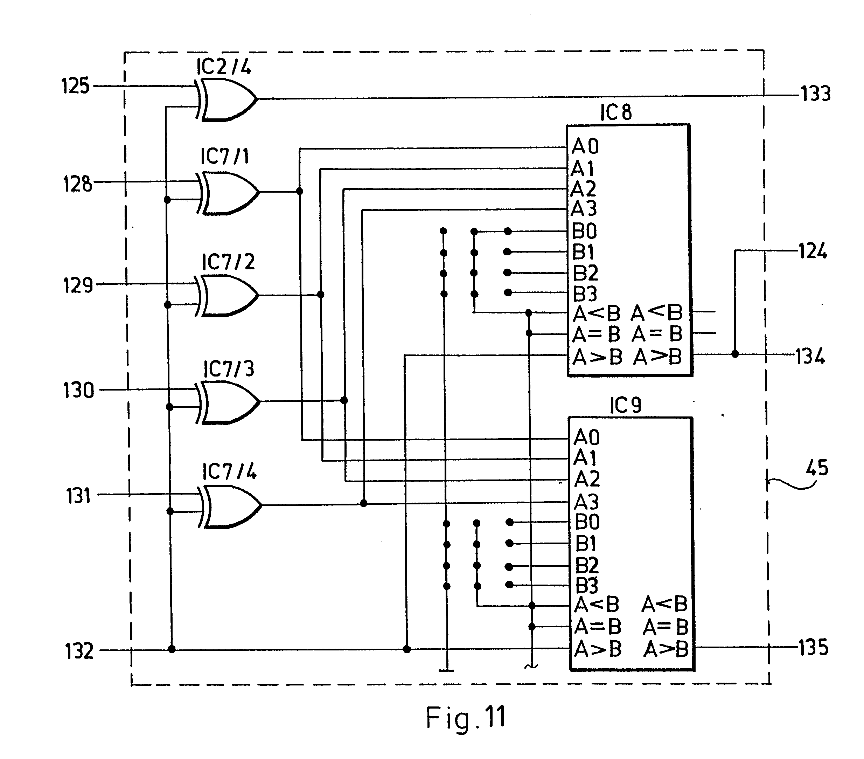

In der den Absolutwert erzeugenden und vergleichenden Untereinheit 45 - wie es in Fig. 11 dargestellt ist - ist der Eingang 125 an einem Eingang der Einheit IC2/2, der Eingang 128 an einem Eingang der Einheit IC7/4, der Eingang 129 an einem Eingang der Einheit IC7/1, der Eingang 130 an einem Eingang der Einheit IC7/2, der Eingang 131 an einem Eingang der Einheit IC7/3 angeschlossen. Der andere Eingang der Einheite IC2/2, IC7/4, IC7/1, IC7/2 und IC7/3 sind miteinander und mit dem Eingang 132 verbunden. Die Einheit IC2/2 gibt den Ausgang 133.

Der Ausgang der Einheit IC7/4 ist am Eingang A0, wogegen der Ausgang der Einheit IC7/1 am Eingang A1, der Ausgang der Einheit IC7/2 am Eingang A2 und der Ausgang der Einheit IC7/3 am Eingang A3 des digitalen Komparators IC8 und des digitalen Komparators IC9 angeschlossen.

Die Eingänge B0, B1, B2, B3 der digitalen Komparatoren IC8 und IC9 sind die Basissignaleingänge. Die Eingänge A<B und die Eingänge A = B sind an der Speisespannung, wogegen die Eingänge A>B am Eingang 132 angeschlossen.

Der Ausgang A>B des digitalen Komparators IC8 gibt die Ausgänge 124 und 134, der Ausgang A>B des digitalen Komparators IC9 gibt den Ausgang 135.

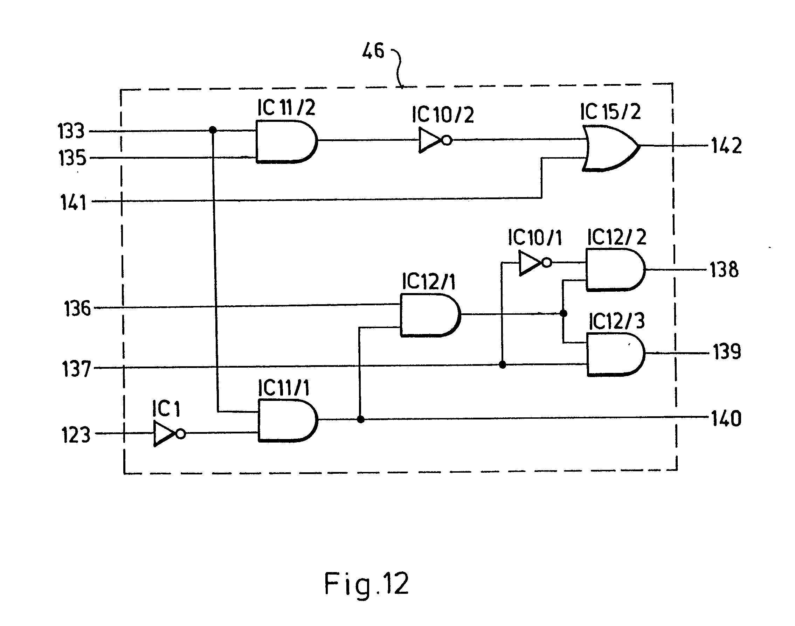

In der die Bewegung in Schaltrichtung steuernden Untereinheit 46 ist - wie in Fig. 12 dargestellt - der Eingang 133 an einem Eingang der Einheit IC11/2 und der Einheit IC11/1 angeschlossen.

Am anderen Eingang der Einheit IC11/2 ist der Eingang 135 angeschlossen, wogegen ihr Ausgang durch die Einheit IC10/2 an einem Eingang der Einheit IC15/2 angeschlossen ist. Der andere Eingang der Einheit IC15/2 ist mit dem Eingang 141 verbunden, ihr Ausgang gibt den Ausgang 142.

Am anderen Eingang der Einheit IC11/1 ist durch den Schmidt-Trigger IC1 der Eingang 123 angeschlossen. Der Ausgang der Einheit IC11/1 ist einerseits an einem Eingang der Einheit IC12/1 angeschlossen, andererseits gibt er den Ausgang 140. Der andere Eingang der Einheit IC12/1 ist mit dem Eingang 136, wogegen ihr Ausgang mit je einem Eingang der Einheit IC12/2 und der Einheit IC12/3 verbunden.

Der andere Eingang der Einheit IC12/3 ist unmittelbar, wogegen der andere Eingang der Einheit IC12/2 durch die Einheit IC10/1 am Eingang 137 angeschlossen. Der Ausgang der Einheit IC12/2 gibt den Ausgang 138, und der Ausgang der Einheit IC12/3 gibt den Ausgang 139.

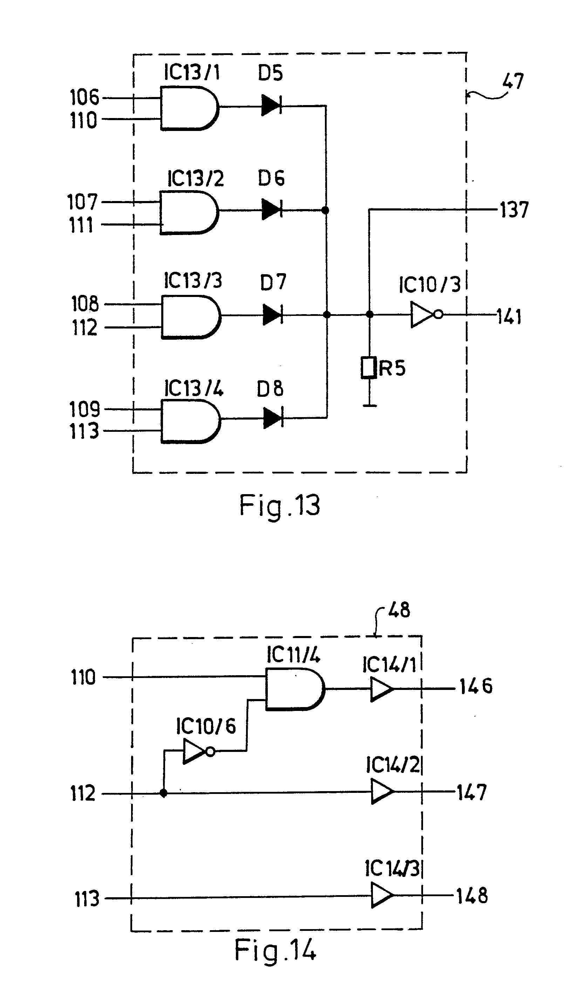

Nach Fig. 13 sind die Eingänge 106 und 110 der die Stellung in Wahlrichtung vergleichenden Untereinheit 47 an den Eingängen der Einheit IC13/4, die Eingänge 107 und 111 an den Eingängen der Einheit IC13/1, die Eingänge 108 und 112 an den Eingängen der Einheit IC13/3, und die Eingänge 109 und 113 an den Eingängen der Einheit IC13/2 angeschlossen. Der Ausgang der Einheit IC13/4 ist durch die Diode D5, der Ausgang der Einheit IC13/1 durch die Diode D6, der Ausgang der Einheit IC13/3 durch die Diode D7, schliesslich die Einheit IC13/2 durch die Diode D8 miteinander und unmittelbar mit dem Ausgang 137 verbunden, durch die Einheit IC10/5 mit dem Ausgang 141 und durch den Widerstand R6 mit dem Erdpunkt verbunden.

Wie es in Fig. 14 dargestellt ist, ist der Eingang der die Bewegung in Wahlrichtung steuernden Untereinheit 48 an einem Eingang der Einheit IC11/3, ihr Eingang 112 einerseits durch die Einheit IC10/3 am anderen Eingang der Einheit IC11/3, andererseits durch die Einheit IC14/3 am Ausgang 147, und schliesslich ihr Eingang 113 durch die Einheit IC14/4 am Ausgang 148 angeschlossen. Der Ausgang der Einheit IC11/3 gibt durch die Einheit IC14/1 den Ausgang 146.

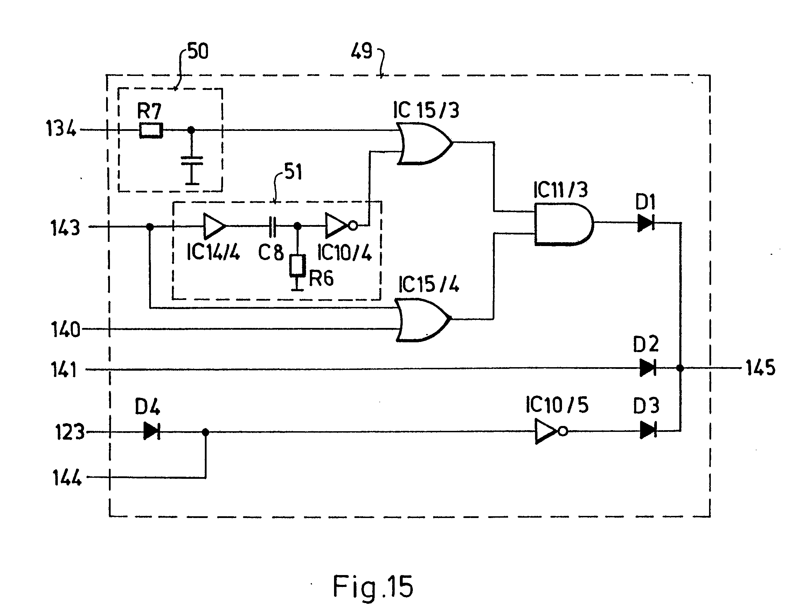

Die den Elektromagnet steuernde Untereinheit 49 - wie in Fig. 15 ersichtlich - enthält auch den die Einschaltung des Elektromagnets verzögernden Block 50 und den die Auflösung des Elektromagnets tempierenden Block 51.

Der Eingang 134 ist durch den Widerstand R9 einerseits an einem Eingang der Einheit IC15/1, andererseits durch den Kondensator C7 am Erdpunkt angeschlossen. Der Widerstand R9 und der Kondensator C7 bilden den die Einschaltung des Elektromagnets verzögernden Block 50.

Der Eingang 143 ist einerseits an einem Eingang der Einheit IC15/3, andererseits durch die Einheit IC14/5, den Kondensator C8 und die Einheit IC10/1 am anderen Eingang der Einheit IC15/1 angeschlossen. Der die Auflösung das Elektromagnets tempierende Block 51 besteht aus der Einheit IC14/5, dem Kondensator C8, der Einheit IC10/1, weiterhin aus dem den gemeinsamen Punkt der zwei letzterwähnten Bauteile mit dem Erdpunkt verbindenden Widerstand R5.

Der Eingang 140 ist am anderen Eingang der Einheit IC15/3 angeschlossen. Der Ausgang der Einheit IC15/3 und der Ausgang der Einheit IC15/1 sind an je einem Eingang der Einheit IC11/1 angeschlossen. Der Ausgang der Einheit IC11/1 ist durch die Diode D1 am Ausgang 145 angeschlossen.

Ebenfalls am Ausgang 145 ist der Eingang 141 durch die Diode D2 angeschlossen.

Der Eingang 123 ist durch die Diode D4, der Eingang 144 ist unmittelbar am Eingang der Einheit IC10/4, wogegen der Ausgang der Einheit IC10/4 durch die Diode D3 ebenfalls am Ausgang 145 angeschlossen.

Die Anpassungsstufen I und Leistungsverstärker T haben keine Steuerungsaufgabe, sie sind kein Teil der Erfindung. So ist ihre ausführliche Bekanntmachung unnötig, weil ihr Zusammenbau für einen Fachmann eine Routinaufgabe ist.

Die oben beschriebene Fernschaltvorrichtung funktioniert wie folgt.

Wir müssen vorausschicken, dass wenn eine Gangstufe eingeschaltet ist, wird - wenn die Spannungsversorgung der Fernschaltvorrichtung aufhört - die Gangstufe eingeschaltet bleiben, und auch der Fernschalthebel 12 bleibt in der der Gangstufe entsprechenden Stellung. Aus diesem Gesichtspunkt ist es neutral, ob die Spannungsversorgung infolge elektrischer Betriebsstörung oder Abstellung des Kraftfahrzeuges aufgehört hat. Deshalb ist die Fernschaltvorrichtung im elektrischen Netz des Kraftfahrzeuges derart eingebunden, dass sie früher unter Spannung gelangt als dass der Motor anlassbar ist.

Wenn der Fahrzeugfahrer starten will, setzt er die Fernschaltvorrichtung unter Spannung und mit der Bewegung des Fernschalthebels 12 kann er auf übliche Weise kontrollieren, ob jedwelche Gangstufe eingeschaltet ist. Zwecks Einfachheit beginnen wir die Bekanntmachung der Funktionierung so, dass der Fernschalthebel 12 in neutraler Stellung N ist. Dementsprechend ist der Schaltzylinder 35 in Mittelstellung, und der Wahlzylinder 34 bei der Schaltstrasse 3-4$^X$. Danach kann der Motor angelassen werden.

Nach dem Anlassen des Motors löst der Fahrzeugfahrer -wie auch bei den traditionellen Kraftfahrzeugen - die Kupplung mittels Drücken des Kupplungspedals 8 auf. Das Drücken des Kupplungspedals 8 ist durch den Fühler ET wahrgenommen, und dieser gibt am Eingang 104 der Steuereinheit 10 ein Signal. Auf Wirkung des am Eingang 104 ankommenden Signals erscheint ein Signal auch am Ausgang 144 der Anpassungsstufe I, danach gelangt das Signal an die über den Eingang 144 verfügenden Leistungsverstärker T und an den Eingang 144 der den Elektromagnet steuernden Untereinheit 49.

Die Leistungsverstärker T schalten durch die Ausgänge 114, 115, 116 Spannung auf den Elektromagnet der Ventile SK0, SK1, SK2. Die Ventile SK0, SK1, SK2 öffnen und lassen aus der Pressluftquelle Pressluft in die Zylinderräume V0, V1 und V2 des Schaltzylinders 35. Da auf diese Weise jeder Zylinderraum des Schaltzylinders 35 aufgefüllt ist, sind die auf die Kolben 37 wirkenden Kräfte in Gleichgewicht, die Kolbenstange 36 bewegt sich nicht.

Die den Elektromagnet steuernde Untereinheit 49 erzeugt auf die Wirkung des an ihrem Eingang 144 ankommenden Signals noch kein Signal, dieses Signal ist für diese Untereinheit nur ein Zulassungssignal.

Zur Bewegung des Kraftfahrzeuges muss der Fahrzeugfahrer die Gangstufe 1 schalten. Dazu verschiebt er den Fernschalthebel 12 in Wahlrichtung v zur Schaltstrasse 1-2$^x$. Die am Ende des Fernschalthebels 12 angeordnete Platte 15 gelangt über den Fühler EV12, der zum Eingang 110 der Steuereinheit 10 ein Signal gibt. Von hier gelangt das Signal an den Eingang der die Bewegung in Wahlrichtung steuernden Untereinheit 48 und an den Eingang der die Stellung in Wahlrichtung vergleichenden Untereinheit 47.

Die die Bewegung in Wahlrichtung steuernde Untereinheit 48 erzeugt an ihrem Ausgang 146 ein Signal für den Leistungsverstärker T, der über seinen Ausgang 117 Spannung an den Elektromagnet des Ventils SV12 schaltet. Das Ventil SV12 lässt Pressluft in den entsprechenden Raum des Wahlzylinders 34, wodurch dieser das Stufenwechselorgan 33 in Wahlrichtung v zur Schaltstrasse 1-2$^x$ bewegt. Der Erfolg der Wahl wird durch den Fühler ES12 wahrgenommen, der ein Signal an den Eingang 106 der Steuereinheit 10 gibt.

Das am Eingang 106 ankommende Signal wird durch die die Stellung in Wahlrichtung vergleichende Untereinheit 47 mit dem am Eingang 110 angekommenen Signal verglichen. Wenn die zwei Signale übereinstimmen, das heisst sowohl der Fernschalthebel 12 als auch das Stufenwechselorgan 33 bei derselben Schaltstrasse - in diesem Fall bei der Schaltstrasse 1-2$^x$ - sind, erzeugt die die Stellung in Wahlrichtung vergleichende Untereinheit 47 ein Signal an ihren Ausgängen 137 und 141 für die die Bewegung in Schaltrichtung steuernde Untereinheit 46, beziehungsweise an ihrem Ausgang 141 für die den Elektromagnet steuernde Untereinheit 49.

Die den Elektromagnet steuernde Untereinheit 49 wird auf Wirkung des an ihrem Eingang 144 ankommenden Signals und auf Wirkung des an ihrem Eingang 141 ankommenden Signals - welche ebenfalls Zulassungssignale für sie sind -ein Signal für den Leistungsverstärker T erzeugen, der den Elektromagnet M entspannt. Der Elektromagnet M, der bisher die Schleife 21 gehalten hat, lässt sie nun los. Auf diese Weise kann der Fernschalthebel 12 nun auch in Schaltrichtung k bewegt werden.

Der Fahrzeugfahrer führt nun den Fernschalthebel 12 in der Schaltstrasse 1-2$^x$ in Schaltrichtung k gegen die der Gangstufe 1 entsprechende Stellung.

Mit der Bewegung des Fernschalthebels 12 bewegt sich auch die Signalgebereinheit 18. Bei der Bewegung verschiebt sich die Spalte 19 vor dem Fühler EK0 weg, der ein Signal für den Eingang 103 der Steuereinheit 10 gibt. Der Fühler EK0 fühlt also, dass sich die Signalgebereinheit 18 aus der Mittelstellung ausbewegt hat.

Bei Bewegung der Signalgebereinheit 18 bewegen sich auch die Spalten 20. In diesem Fall ist die Bewegung derartig, dass die Spalte 20 mit der Reihennummer 0 erst den Fühler EK2 vollständig verlassen wird und dann den Fühler EK1. Der Fühler EK2 erzeugt ein Signal an den Eingang 102 der Steuereinheit, und der Fühler EK1 ein Signal an den Eingang 101. Das Signal des Fühlers EK2 und das Signal des Fühlers EK1 gelangen durch die entsprechende Anpassungsstufe I in die richtungsfühlende Untereinheit 43. Die richtungsfühlende Untereinheit 43 bestimmt die Richtung der Bewegung des Fernschalthebels 12 in Schaltrichtung k aus der Tatsache, dass das Signal des Fühlers EK2 früher angekommen ist als das Signal des Fühlers EK1.

Das am Eingang 103 ankommende Signal des Fühlers EK0 gelangt durch die Anpassungsstufe auch in die vorwärts-rückwärts Zähluntereinheit 44. Dieses Signal ist ein Befehl, dass die vorwärts-rückwärts Zähluntereinheit 44 das Zählen der Impulse beginnen soll. Die zu zählenden Impulse gelangen aus dem Signal der Fühler EK2, EK1 durch die richtungsfühlende Untereinheit 43 in die vorwärts-rückwärts Zähluntereinheit 44.

Die vorwärts-rückwärts Zähluntereinheit 44 führt das momentane Ergebnis des Zählens in die den Absolutwert erzeugende und vergleichende Untereinheit 45.

Die den Absolutwert erzeugende und vergleichende Untereinheit 45 vergleicht das momentane Ergebnis des Zählens mit den unserseits vorbestimmten und eingespeisten Werten.

Nach den kurzen Abstecher auf den Fernschalthebel 12 und die sich damit synchron bewegende Signalgebereinheit 18 zurückkommend: wenn die Spalte 20 mit der Reihennummer 0 sowohl den Fühler EK2 als auch den Fühler EK1 verlässt, bestimmt die richtungsfühlende Untereinheit 43 die Richtung der Bewegung der Signalgebereinheit 18. Die richtungsfühlende Untereinheit 43 führt diese Information in der Form eines Signals unmittelbar auch in die den Absolutwert erzeugende und vergleichende Untereinheit 45. Die den Absolutwert erzeugende und vergleichende Untereinheit 45 führt das Signal in die die Bewegung in Schaltrichtung steuernde Untereinheit 46 weiter, die mittels dem für den Leistungsverstärker T erzeugten Signal den Elektromagnet des Ventils SK2 entspannt. Das Ventil SK2 entleert den Zylinderraum V2 des Schaltzylinders 35.

Mit der Entleerung des Zylinderraumes V2 löst sich das Kräftegleichgewicht im Schaltzylinder 35 auf. Da die dem Zylinderraum V0 naheliegende aktive Kolbenfläche AK der Schwimmkolben 37 geringer ist als die dem Zylinderraum V1 naheliegende aktive Kolbenfläche AS, bewegt sich die Kolbenstange 36 in Richtung des Zylinderraumes V2, und bewegt das Stufenwechselorgan 33 in Schaltrichtung $\underline{k}$ gegen die der Gangstufe 1 entsprechende Stellung mit einer dem Unterschied zweischen der aktiven Kolbenfläche AS und der aktiven Kolbenfläche AK entsprechenden Kraft. Dadurch beginnt die Synchronisierung der Gangstufe 1 mit einer geringeren Druckkraftstufe.

Die den Absolutwert erzeugende und vergleichende Unter einheit 45 führt gleichzeitig mit dem Anlassen der Synchronisierung ein Signal auch in die den Elektromagnet steuernde Untereinheit 49. Die den Elektromagnet steuernde Untereinheit 49 setzt den Elektromagnet M - mittels der mit dem die Einschaltung des Elektromagnets verzögernden Block 50 eingestellten Verzögerung - mit dem dem Leistungsverstärker T zugeführten Signal unter Spannung, wodurch der Elektromagnet M die Schleife 21 befestigt. Nun stockt der Fernschalthebel 12, und zwar derart, dass sich die Spalte 20 mit der Reihennummer -2 der Signalgebereinheit 18 vor den Fühlen EK2, EK1 befindet. Die Verstokkung des Fernschalthebels 12 signalisiert dem Fahrzeugfahrer, dass die Synchronisierung der Gangstufe 1 im Gang ist.

Der Fernschalthebel 12 kann im Vergleich zur befestigten Schleife 21 gegen die Feder 24 noch ein wenig weiter geschoben werden. Wenn der Fahrzeugfahrer den Fernschalthebel 12 an der Anstossfläche 25 der Schleife 21 anstossen lässt, gelangt die Spalte 20 mit der Reihennummer -4 der Signalgebereinheit 18 vor die Fühler EK2, EK1. Nun erzeugt die den Absolutwert erzeugende und vergleichende Untereinheit 45 ein neueres Signal für die die Bewegung in Schaltrichtung steuernde Untereinheit 46, die jetzt durch das dem Leistungsverstärker T zugeführte Signal auch den Elektromagnet des Ventils SK0 entspannt. Das Ventil SK0 entleert auch den Zylinderraum V0 des Schaltzylinders 35. Dadurch wird die Kolbenstange 36 mit einer grösseren Druckkraftstufe weiter arbeiten.

Bis die geringere Druckkraftstufe zur Synchronisierung dimensioniert wurde, ist die grössere Druckkraftstufe zur tatsächlichen Einschaltung der Gangstufe dimensioniert. So wird die Kolbenstange 36 mit Hilfe des Stufenwechselorgans 33 die Einschaltung der Gangstufe 1 vollenden. Wenn die Kolbenstange 36 ihre äussere Stellung erreicht, springt die Kugel 41 der Positionierungskonstruktion 39 in die in der Kolbenstange 36 ausgebildete Nut 38.

Die Einschaltung der Gangstufe 1 ist durch den Fühler ES0 wahrgenommen. Bis dahin bewegt sich nämlich die in der Kolbenstange 36 ausgebildete Einengung 42 vor dem Fühler ES0 weg und gelangt vor die Strecke P1 der Kolbenstange 36. Das Signal des Fühlers ES0 gelangt an den Eingang 105 der Steuereinheit 10, und von doert durch die Anpassungsstufe I in die den Elektromagnet steuernde Untereinheit 49. Auf Wirkung des erhaltenen Signals wird die den Elektromagnet steuernde Untereinheit 49 mittels des dem Leistungsverstärker T zugeführten Signals den Elektromagnet M entspannen. Der Elektromagnet M lässt die Schleife 21 los. /Der die Auflösung des Elektromagnets tempierende Block 50 hat die Auflösung auch hier verzögert, das hat aber hier keine Bedeutung./ Der Fernschalthebel 12 kann wieder weitergeschoben werden.

Der Fahrzeugfahrer schiebt nun den Fernschalthebel 12 in das Ende der Schaltstrasse 1-2$^{x}$. Hier stosst der Fernschalthebel 12 an der Leitung 32 auf. In diesem Zustand des Fernschalthebels 12 gelangt die Spalte 20 mit der Reihennummer -10 der Signalgebereinheit 18 vor die Fühler EK2, EK1. Nun erzeugt die den Absolutwert erzeugende und vergleichende Untereinheit 45 erneut ein Signal für die den Elektromagnet steuernde Untereinheit 49, die nach der Verzögerung des die Einschaltung des Elektromagnets verzögernden Blocks 50 mittels eines dem Leistungsverstärker T zugeführten Signals den Elektromagnet M wieder unter Spannung setzt, der die Schleife 21 wieder befestigt. Die Verzögerung ist notwendig, damit sich die Feder 24 in ihre Grundstellung wiederstellen kann. Das ist so möglich, dass wenn der Fernschalthebel 12 an der Leitung 32 aufstosst, sich die Schleife 21 noch weiter bewegen kann, also die Feder 24 die Schleife 21 vom bereits fix aufgestossten Fernschalthebel 12 verschieben kann. Das ist notwendig, weil im entgegengesetzten Fall die Feder 24 den Fernschalthebel 12 zurückstossen würde, was durch die Steuereinheit 10 derart bewertet würde, dass der Fahrzeugfahrer die Gangstufe 1 ausschalten will. Diese Unsicherheit ist durch die Verzögerung um cca 150 msec beseitigt.

Der Fahrzeugfahrer bewertet den vorerwähnten Aufstoss des Fernschalthebels 12 derart, dass die Schaltung der Gangstufe 1 vollendet wurde, deshalb schliesst er die Kupplung. Das Hochlassen des Kupplungspedals 8 ist durch den Fühler ET wahrgenommen, auf Wirkung seines Signals entspannt der entsprechende Leistungsverstärker T auch den Elektromagnet des Ventils SK. Zum Schluss wird also das Ventil SK1 auch den Zylinderraum V1 des Schaltzylinders 35 entleeren. Die Kolbenstange 36 ist durch die Positionierungskonstruktion 39 in dieser Stellung gehalten.

Wie es aus den bisher beschriebenen ersichtlich ist, bleibt die Bewegung des Fernschalthebels 12 um einen Schritt hinter der durch den Schaltzylinder 35 tatsächlich verwirklichten Gangstufenschaltung. Diese "Beschwindelung" des Fahrzeugfahrers verursacht keinsfalls Nachteil, aber der Fernschalthebel 12 simuliert die Bewegung des traditionellen Schalthebels auf vollständige Weise.

Aufgrund der bisherigen Bekanntmachung der Funktionierung der Fernschaltvorrichtung ist die Aufgabe, die Verbindung und die Funktionierung der Untereinheite der Steuereinheit 10 gut sichtbar. Aus diesem Grund vernachlässigen wir im weiteren den Hinweis auf die Untereinheite. Wir erwähnen sie nur dort, wo es zum Verständnis der Funktionierung unentbehrlich ist.

Wenn der Fahrzeugfahrer Gangstufe wechseln will, drückt er das Kupplungspedal 8 wieder. Auf Wirkung des durch den Fühler ET erzeugten Signals setzt die Steuereinheit den Elektromagnet des Ventils SK1 unter Spannung. Der Zylinderraum V1 des Schaltzylinders 35 wird aufgefüllt. Das durch den Fühler ET erzeugte Signal ist zugleich das eine Zulassungssignal zur Einschaltung der Spannung des Elektromagnets M. Sinngemäss wird die Steuereinheit den Elektromagnet M dadurch noch nicht entspannen.

Danach zieht der Fahrzeugfahrer den Fernschalthebel 12 gegen seine Mittelstellung. Da der Elektromagnet M die Schleife 21 noch fest hält, kann der Fernschalthebel 12 nur gegen die Feder in geringem Mass bewegt werden. Das ist genügend dazu, dass sich die Signalgebereinheit 18 bewegt und die Spalte 20 mit der Reihennummer -8 vor die Fühler EK1, EK2 gelangt. Die Signalgebereinheit 18 wird die Abdeckung dieser Fühler im Vergleich zu den vorangehend beschriebenen in umgekehrter Reihenfolge beginnen. Die Steuereinheit 10 wird aus dem Signal der Fühler EK1, EK2 bereits beim Starten der Signalgebereinheit 18 feststellen, dass die Bewegung der Signalgebereinheit 18 von umgekehrter Richtung ist, deshalb wird sie den Elektromagnet des Ventils SK1 entspannen und den Elektromagnet des Ventils SK0 unter Spannung setzen. Auf diese Weise wird sich der Zylinderraum V1 des Schaltzylinders 35 entleeren, sein Zylinderraum V0 auffüllen, dadurch gelangt seine Kolbenstange 36 in Mittelstellung. Die sich in Mittelstellung bewegende Kolbenstange 36 schaltet die Gangstufe 1 durch das Stufenwechselorgan 33 aus.

Danach setzt die Steuereinheit 10 die Elektromagnete der Ventile SK1 und SK2 wieder unter Spannung, die auch die Zylinderräume V1 und V2 des Schaltzylinders 35 auffüllen. So werden wieder alle drei Zylinderräume aufgefüllt, selbstverständlich besteht auch jetzt das Kräftegleichgewicht.

Wenn die Strecke P1 ganzen Querschnitts der Kolbenstange 36 den Fühler ES0 verlässt, ist dessen Signal das zweite Zulassungssignal zur Auflösung des Elektromagnets M, so müsste der Elektromagnet M die Schleife 21 loslassen. Damit der Fernschalthebel 12 von einer eventuell kraftvolleren Bewegung des Fahrzeugfahrers in der gleichen Schaltstrasse nicht über die Mittelstellung hinüberkippen soll, soll es abgewartet werden, dass der Schaltzylinder 35 erst in Mittelstellung gelangt. Deshalb hält der die Auflösung des Elektromagnets tempierende Block 51 noch für 150 msec durch und die Steuereinheit 10 entspannt den Elektromagnet M nur danach. Der Fernschalthebel 12 kann nun in seine Mittelstellung zurückkehren. Wie es zu sehen ist, spielt der die Auflösung des Elektromagnets tempierende Block 51 in dieser Funktionsphase eine Rolle.

Wenn der Fernschalthebel 12 in Mittelstellung gelangt ist, kann die Schaltung der nächsten Gangstufe auf die oben beschriebene Weise begonnen werden.

Es soll derjenige Fall gesondert erwähnt werden, wenn die jedwelcher Gangstufe zugehörende Synchronkonstruktion des Wechselgetriebes 11 schadhaft wird. In diesem Fall kann nämlich diese Gangstufe nicht geschaltet werden. Da der Elektromagnet M die Schleife zur Zeit der Synchronisierung und der Einschaltung der Gangstufe zurückhält, wenn die Gangstufe nicht schaltbar ist, gelangt die Strecke P1 ganzen Querschnitts der Kolbenstange 36 nicht vor den Fühler ES0, und wegen Mangel an Signal des Fühlers ES0 entpannt die den Elektromagnet steuernde Einheit 49 den Elektromagnet M nicht. Der Fernschalthebel 12 kann also in die Schaltstrasse 1-2$^x$ in seine äussere Stellung nicht eingeschoben werden. Das verursacht dem Fahrzeugfahrer dieselbe Vorstellung, als könnte er den Gangstufenwechsel mit dem traditionellen Schalthebel nicht beenden, deshalb wird er gezwungen, eine andere Gangstufe zu suchen.

Der Fahrzeugfahrer bewegt den Fernschalthebel 12 wieder gegen seine Mittelstellung. Die Spalten 20 der Signalgebereinheit 18 werden nun vor den Fühler EK1, EK2 in entgegengesetzter Richtung vorbeilaufen. Die Steuereinheit 10 stellt fest, dass sich die Richtung der Bewegung der Signalgebereinheit 18 verändert hat, aber dass die Spalte 20 der Signalgebereinheit 18 den Fühler EK0 noch nicht erreicht hat. Deshalb wird sie den die Schaltung der geplanten Gangstufe zustandebringenden und deshalb unter Spannung gesetzten Elektromagnet der Ventile SK1 oder SK2 sofort entspannen. Es bleibt nur im Zylinderraum V0 des Schaltzylinders 35 Pressluft, so kehrt die Kolbenstange 36 in Mittelstellung zurück.

Hier soll es erwähnt werden - aus den bisher beschriebenen ist es übrigens offenbar -, dass wenn sich der Fernschalthebel 12 in jedwelcher Schaltstrasse aus der Mittelstellung in jedwelcher Richtung bewegt hat, soll er in jedwelcher Phase seiner Bewegung sein, wird die Steuereinheit 10 auf seine Bewegung in entgegengesetzter Richtung immer so reagieren, dass sie die Elektromagnete der Ventile SK1, SK2 entspannt, den Elektromagnet des Ventils SK0 unter Spannung setzt oder in eingeschaltetem Zustand hält. Auf diese Weise wird der Schaltzylinder 35 das Stufenwechselorgan 33 in Mittelstellung bringen.

Bei der Bekanntmachung der Funktionierung der Fernschaltvorrichtung konnten wir aus der Zumutung ausgehen, dass der Fernschalthebel 12 und das Stufenwechselorgan 33 beim Anlassen des Kraftfahrzeuges in neutraler Stellung N waren. Selbstverständlich kann das Kraftfahrzeug auch derart abgestellt werden, dass jedwelche Gangstufe eingeschaltet bleibt. In diesem Fall beginnt der Fahrzeugfahrer das Anlassen ebenso, wie wir die Ausschaltung der Gangstufe oben beschrieben haben. Es kann auch vorkommen, dass wenn sich das Kraftfahrzeug abstellt, der Fernschalthebel 12 zwar in Mittelstellung ist, aber nicht bei der Schaltstrasse 3-4$^x$. Hier wird es von grosser Bedeutung, dass wenn sich in keinem der Zylinderräume des Wahlzylinders 34 Pressluft befindet, die eingebauten Feder seine Kolbenstange zur Schaltstrasse 3-4$^x$ stellen, beziehungsweise auf dieselbe Weise die Feder 27 und 29 auch den Fernschalthebel 12 zur Schaltstrasse 3-4$^x$ stellen. So kann es gesichert werden, dass der Fernschalthebel 12 auch im ausgeschalteten Zustand der Fernschaltvorrichtung mit dem Wahlzylinder 34 synchron bleibt. Selbstverständlich kann auch eine Lösung ohne Feder angenommen werden, hier soll der Wahlzylinder 34 bei der Setzung unter Spannung der Fernschaltvorrichtung erst die mit der Stellung des Fernschalthebels 12 gleiche Stellung aufnehmen.

Im Zusammenhang mit der verzögerten Auflösung und Ergreifung des Elektromagnets M soll es bemerkt werden, dass das nicht nur auf elektronischem Wege verwirklicht werden kann. Wenn die Strecke P0 an der Kolbenstange 36 kürzer ist als die ganze Hublänge, wird der Fühler ES0 eher ein Signal erzeugen als dass die Kolbenstange 36 in ihre äussere Stellung gelangt, beziehungsweise im Rückwärtslauf später als dass sie sich aus ihrer äusseren Stellung bewegt. So kann die Verzögerung mit der Wahl der Strecke P0 gesichert werden.

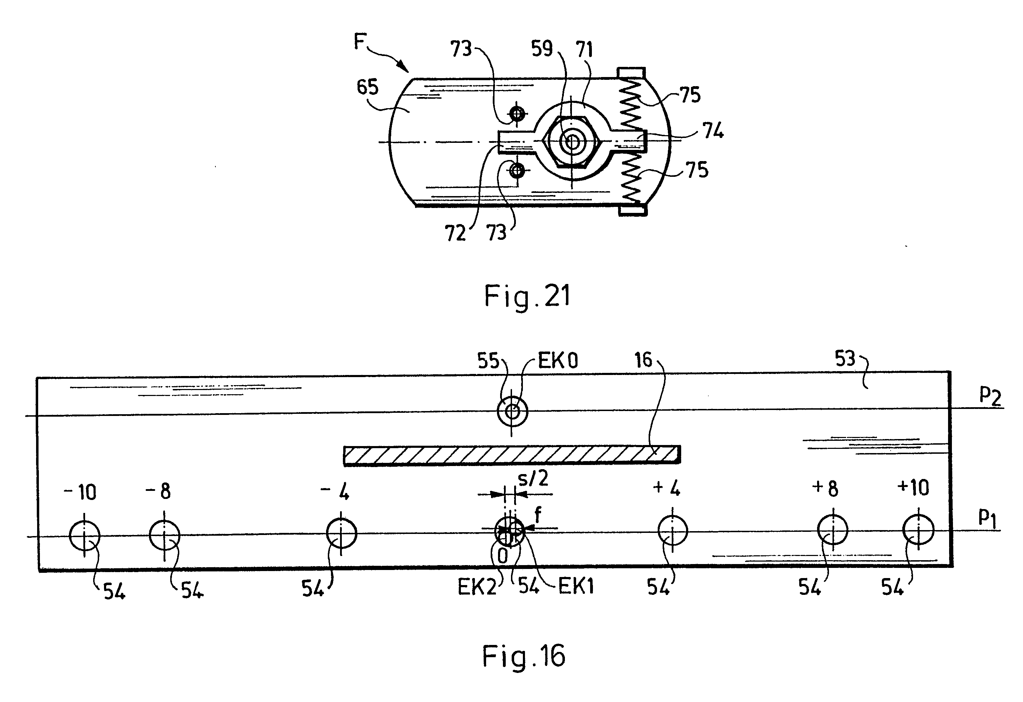

Die Ausbildung der Signalgebereinheit 18 kann nicht nur - wie hier beschrieben - kammartig sein. In Fig. 16 ist eine andere Variante dargestellt.

Die Signalgebereinheit 53 kann - hinsichtlich ihrer An ordnung und Form - mit der Signalgebereinheit 18 gleich sein. Der Unterschied besteht darin, dass darin nicht Spalten, sondern kreisförmige Öffnungen ausgebildet sind. In der Bewegungsbahn p1 sind sieben Öffnungen 54, in der Bewegungsbahn p2 ist eine Öffnung 55 ausgebildet.

Die Aufgabe der Öffnung 54 ist dieselbe wie die der Spalten 20, deshalb sind diese mit derjenigen Reihennummer gezeichnet, die den Stellungen der Spalten 20 entsprechen. Auch die Öffnung 55 ist ebenso angeordnet, wie die Spalte 19.

Die Fühler EK1, EK2 sind in der Bewegungsbahn p1 der Öffnungen 54, der Fühler EK0 in der Bewegungsbahn p2 der Öffnung 55 angeordnet. Der Abstand s/2 der Verschiebung der Fühler EK1 und EK2 ist auch hier mit der Hälfte des Sichtbereiches f gleich. Dieser Wert s/2 könnte auch grösser sein, aber es ist nicht zweckmässig, vom Wert des Sichtbereiches f grösser zu wählen, denn da müssten zu grosse Öffnungen 54 gefertigt werden, wodurch die Funktionierung der Fernschaltvorrichtung ungenau sein würde.

Es kann ohne besondere Erklärung eingesehen werden, dass die Signalgebereinheit 53 ihre Aufgabe im wesentlichen ebenso erfüllt, wie die Signalgebereinheit 18. Es sollen nur der Aufbau der Steuereinheit 10, und innerhalb dessen die in die den Absolutwert erzeugende und vergleichende Untereinheit 45 eingeführten Basisdaten modifiziert werden.

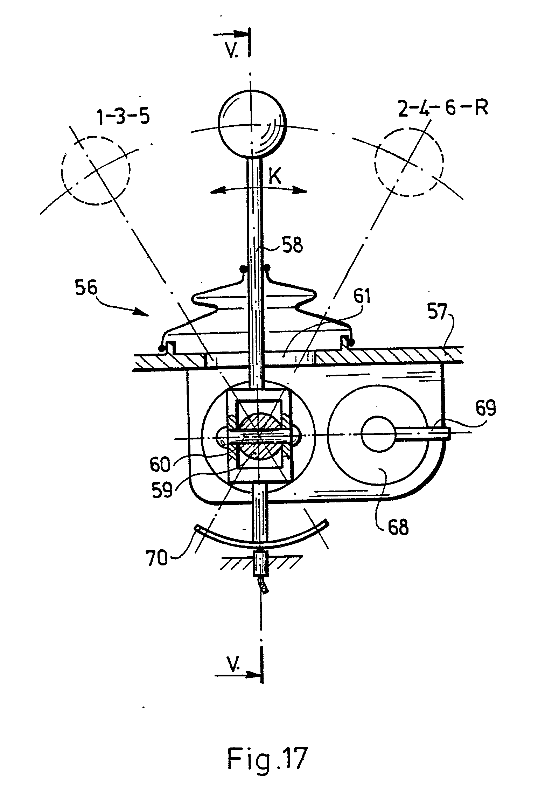

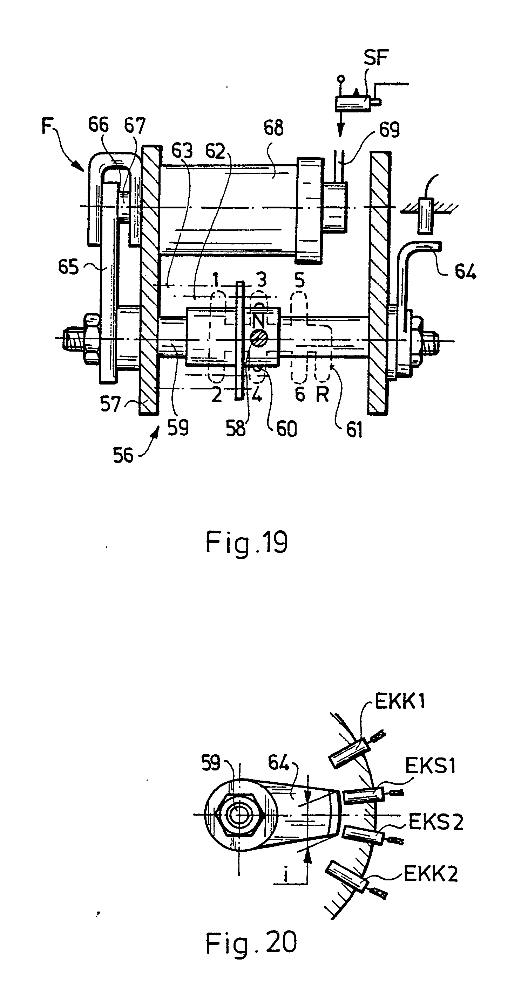

Die Fernschalteinheit kann auch auf andere Weise aufgebaut werden. Dafür ist ein Beispiel die in Fig. 17 und 19 dargestellte Fernschalteinheit 56, die zwecks Einfachheit mit einem der Betätigung des vorangehend beschriebenen Wechselgetriebes 11 entsprechenden Aufbau dargestellt ist. Also es ist auch für die Fernschalteinheit 56 das Schaltbild 52 charakteristisch, und auch die Stufenwechseleinheit 9 des Wechselgetriebes 11 ist von identischem Aufbau.

Im Gehäuse 57 der Fernschalteinheit 56 ist der Fernschalthebel 58 um der Achse 59 in Schaltrichtung k und um einen darauf senkrechten Bolzen 60 in Wahlrichtung v verdrehbar eingebaut. Zur Anführung des Fenrschalthebels 58 ist in der oberen Platte des Gehäuses 57 eine Leitung 61 ausgebildet, die auf die bekannte Weise im wesentlichen der Träger des Schaltbildes 52 ist.

Die um der Achse 59 angeordnete Feder 62 dient zur Haltung des Fernschalthebels 58 in neutraler Stellung N, wobei die Feder 62 sich mit ihrem einen Ende am Fernschalthebel 58, mit ihrem anderen Ende am Gehäuse 57 anstützt. In der Feder 62 ist zur Sicherung gegen unwillkürliche Schaltung der Rückgangstufe R eine kürzere Feder 63 angeordnet.

Am Ende des Fernschalthebels 58 ist eine Platte 70 vorgesehen, die die in Wahlrichtung v angeordneten Fühler EV12, EV34, EV56, EVR betätigt, welche induktive Fühler sind.

Am einen Ende der Achse 59 ist eine Signalgebereinheit 64 befestigt. Die Signalgebereinheit 64 verfügt auf in Fig. 20 sichtbare Weise über eine breitere bogenförmige Mantelfläche, vor welcher zwecks Wahrnehmung der Bewegung in Schaltrichtung k die Fühler EKK1, EKS1, EKS2, EKK2 angeordnet sind, welche ebenfalls induktive Fühler sind. Die Bogenlänge i des Mantels der Signalgebereinheit 64 ist derart gewählt, dass die Fühler EKK1, EKS1, EKS2, EKK2 im Vergleich zueinander derart angeordnet sind, dass die Signalgebereinheit 64 jeden Fühler sowohl gesondert als auch die benachbarten zugleich abdecken kann.

Am anderen Ende der Achse 59 ist eine Schleife 65 befestigt. Senkrecht zur Reibfläche 66 der Schleife 65 ist ein pneumatischer Arbeitszylinder 68 angeordnet. Der pneumatische Arbeitszylinder 68 ist derart dimensioniert, dass wenn er unter Druck gesetzt wird, seine Kolbenstange 67 an der Reibfläche 66 eine so grosse Reibkraft erweckt, die mittels am Fernschalthebel 58 ausgeübte mittelgrosse Handkraft überwunden werden kann. Die Schleife 65 und der pneumatische Arbeitszylinder 68 gemeinsam bilden die Brems-Befestigungskonstruktion F.

Der pneumatische Arbeitszylinder 68 ist durch die Leitung 69 und durch das elektromagnetisch betätigte Ventil SF an der Pressluftquelle angeschlossen.

Die Verbindung zwischen der Fernschalteinheit 56 und der Stufenwechseleinheit 9 ist auch hier durch eine Steuereinheit zustandegebracht. Obwohl die Signalgebereinheit 64 der Fernschalteinheit 56 und die durch die Signalgebereinheit betätigten Fühler EKK1, EKS1, EKS2, EKK2 hinsichtlich ihrer Anordnung und Anzahl vom oben beschriebenen Ausführungsbeispiel abweichend sind, kann die Zusammenstellung der Steuereinheit in Kenntnis der Funktionierung für einen Fachmann kein Problem bedeuten, so werden wir das hier nicht bekanntmachen.

Die Fernschaltvorrichtung und innerhalb dessen die Fernschalteinheit 56 funktionieren wie folgt.

Die Signalerzeugung in Wahlrichtung v und die Antwort der Stufenwechseleinheit 9 sind mit dem vorangehenden identisch.

Wenn die Stufenwechseleinheit 9 nicht die der Stellung des Fernschalthebels 58 entsprechende Schaltstrasse gewählt hat, setzt die Steuereinheit den Elektromagnet des Ventils SF unter Spannung. Das Ventil SF füllt den pneumatischen Arbeitszylinder 68 auf, dessen Kolbenstange 67 sich an die Reibflächen 66 spannt. Dadurch wird die Schleife 65 gebremst, zu ihrer Bewegung ist eine grössere Handkraft erforderlich. Daraus erfährt der Fahrzeugfahrer, dass jedweiche Regelwidrigkeit aufgetreten ist.

Wenn die Stufenwechseleinheit 9 die entsprechende Schaltstrasse gewählt hat, ist der Fernschalthebel 58 in der ausgewählten Schaltstrasse leicht zu bewegen.

In der Mittelstellung des Fernschalthebels 58 sind die Fühler EKS1 und EKS2 durch die Signalgebereinheit 64 abgedeckt. Die Steuereinheit wird auf Wirkung des gemeinsamen Signals der Fühler EKS1 und EKS2 auch die Zylinderräume V0, V1 und V2 des Schaltzylinders 35 in aufgefülltem Zustand halten.

Wenn der Fahrzeugfahrer die Gangstufe 1 einschalten will, bewegt er den Fernschalthebel 58 in Schaltrichtung k in der Schaltstrasse 1-2$^x$ in der der Gangstufe 1 entsprechenden Richtung. Durch die Bewegung des Fernschalthebels 58 verdreht sich die Signalgebereinheit 64 vor dem Fühler EKS2 weg und deckt nur den Fühler EKS1 ab. Die Steuereinheit gibt auf Wirkung des selbständigen Signals des Fühlers EKS1 einen Befehl zur Entleerung des Zylinderraumes V2 des Schaltzylinders 35. Damit beginnt die Synchronisierung der Gangstufe 1 mit der geringeren Druckkraftstufe. Zugleich setzt die Steuereinheit den Elektromagnet des Ventils SF unter Spannung, der den pneumatischen Arbeitszylinder 68 auffüllt, welcher die Schleife 65 abbremst, das heisst das Brems-Befestigungskonstruktion F schliesst. Der Fernschalthebel 58 kann mit abgebremster Schleife 65 schwieriger weiter bewegt werden. Wenn der Fahrzeugfahrer diese Bremswirkung überwindend den Fernschalthebel 58 weiterschiebt, verdreht sich die Signalgebereinheit 64 weiter und wird die Fühler EKS1 und EKK1 gleichzeitig abdecken, und auf Wirkung des gemeinsamen Signals dieser Fühler wird die Steuereinheit einen Befehl auch zur Entleerung des Zylinderraumes V0 des Schaltzylinders 35 geben. Nun erfolgt die Schaltung der Gangstufe 1 mit der grösseren Druckkraftstufe.

Wenn der Schaltzylinder 35 die Schaltung der Gangstufe 1 beendet hat, löst die Steuereinheit mittels Ausschaltung des Elektromagnets des Ventils SF die Brems-Befestigungskonstruktion F auf. Der Fahrzeugfahrer schiebt den Fernschalthebel 58 in der Schaltstrasse 1-2$^x$ ganz bis zur äusseren Stellung, nun verdreht sich die Signalgebereinheit 64 vor dem Fühler EKS1 weg und deckt nur den Fühler EKK1 ab. Die Steuereinheit gibt auf Wirkung des selbständigen Signals des Fühlers EKK1 einen Befehl zur Entleerung des Zylinderraumes V1 des Schaltzylinders 35 und zur Schliessung der Brems-Befestigungskonstruktion F. Die Einschaltung der Gangstufe 1 ist vollendet, alle drei Zylinderräume des Schaltzylinders 35 sind leer, der Fernschalthebel 58 ist befestigt.

Wenn der Fahrzeugfahrer die Gangstufe 1 ausschalten will, schiebt er den Fernschalthebel 58 gegen seine Mittelstellung. Die Signalgebereinheit 64 deckt jetzt auch den Fühler EKS1 wieder ab.

Nun erscheinen die Signale der Fühler EKK1 und EKS1 in der Steuereinheit in umgekehrter Reihenfolge, und das ist durch die Steuereinheit derart bewertet, dass sie nur zur Auffüllung des Zylinderraumes V0 des Schaltzylinders 35 einen Befehl gibt. Auf diese Weise erfolgt die Ausschaltung der Gangstufe 1.

Wenn durch Zurückziehung des Fernschalthebels 58 die Signalgebereinheit 64 den Fühler EKK1 verlässt, gibt die Steuereinheit einen Befehl zur Auflösung der Brems-Befestigungskonstruktion F. Der Fernschalthebel 58 kann in seine Mittelstellung zurückkehren.

Bei der oben bekanntgemachten Fernschalteinheit 56 kann es für einen ungeschickten Fahrzeugfahrer einigermassen Unsicherheit verursachen, dass die Brems-Befestigungskonstruktion F in den erforderlichen Stellungen nicht definiert befestigt, sondern nur bremst. Diese Unsicherheit kann durch die in Fig. 21 dargestellte Lösung beseitigt werden.

Hier ist an der Achse 59 der oben beschriebenen Fernschalteinheit 56 nicht die Schleife 65, sondern eine zwei armige Schwinge 71 befestigt. Die Schleife 65 kann sich im Vergleich zur Achse 59 verdrehen.

Der eine Arm der Schwinge 71 ist als ein Anschlag 72 ausgebildet, der sich zwischen den an der Schleife 65 ausgebildeten Anstossflächen 73 bewegen kann. Der andere Arm 74 der Schwinge 71 ist gegen die Schleife 65 mit je einer Feder 75 ausgestützt.

Bei der derart ausgebildeten Brems-Befestigungskonstruktion F kann die Kolbenstange 67 des pneumatischen Arbeitszylinders 68 die Schleife unbeweglich ergreifen. Die Anstossflächen lassen dem Anschlag 72 eine dermassen grosse Bewegung zu, dass bei der Betätigung der Fühler EKK1, EKS1, EKS2, EKK2 durch den Fernschalthebel 58 die zwei benachbarten Positionen im Vergleich zur befestigten Position noch zustandekommen können.

Die Feder 75 haben dieselbe Aufgabe, wie die Feder 23 und 24 bei der früher beschriebenen Fernschalteinheit 7.

Es ist offenbar, dass die Signalgeber der oben beschriebenen Fernschalteinheit 56 in Schaltrichtung k auch auf die bei der Fernschalteinheit 7 beschriebene Weise ausgebildet werden können. Der Unterschied ist nur, dass die Signalgebereinheit 18 bogenförmig gefertigt werden soll. Es ist auch offenbar, dass die oben beschriebene Fernschalteinheit 56 anstatt induktive Fühler auch mit Optotoren aufgebaut werden kann.

Schliesslich soll bemerkt werden, dass der das Stufenwechselorgan des Wechselgetriebes in Schaltrichtung bewegende pneumatische Arbeitszylinder auch derart aufgebaut werden kann, das gleicher Druck in allen drei Stellungen gleiche Druckkraft gibt. Hier soll zwischen dem die Mittelstellung zustandebringenden Ventil und der Pressluftquelle ein Druckminderer zwischengeschaltet werden.

Als eine Möglichkeit soll noch bemerkt werden, dass in der Brems-Befestigungskonstruktion F, insbesondere bei der zuletzt bekanntgemachten Ausführungsvariante auch ein hydraulischer Arbeitszylinder verwendet werden kann.

## Ansprüche

1. Elektropneumatische Fernschaltvorrichtung, insbesondere zur Schaltung der Gangstufen des synchronisierten mechanischen Wechselgetriebes von Kraftfahrzeugen, wobei mit dem Stufenwechselorgan /33/ des Wechselgetriebes /11/ ein in Wahlrichtung /v/ angeordneter pneumatischer Wahlzylinder /34/ mit, der Anzahl der Schaltstrasse /1-2$^x$, 3-4$^x$, 5-6$^x$, R$^x$/entsprechender Stellungsanzahl und ein in Schaltrichtung /k/ angeordneter Schaltzylinder /35/ mit drei Stellungen in Betätigungsverbindung stehen, der Wahlzylinder /34/ und der Schaltzylinder /35/ durch elektromagnetisch betätigte Ventile /SV12, SV56, SVR, SK0, SK1, SK2/ an der Pressluftquelle angeschlossen sind, weiterhin eine durch den Fahrzeugfahrer bediente Fernschalteinheit /7, 56/ mit einem über, dem Schaltbild /52/ des Wechselgetriebes /11/ entsprechende Stellungen verfügenden Fernschalthebel /12, 58/ vorgesehen ist, die mit den in Wahlrichtung /v/ und Schaltrichtung /k/ angeordneten Signalgebern /EV12, EV34, EV56, EVR; 18, EK0, EK1, EK2; 64, EKK1, EKS1, EKS2, EKK2/ in Betätigungsverbindung steht und die Signalgeber durch eine Steuereinheit /10/ mit den elektromagnetisch betätigten Ventilen /SV12, SV34, SV56, SVR, SK0, SK1, SK2/ in Verbindung stehen, **dadurch gekennzeichnet,** dass der Schaltzylinder /35/ in seinen äusseren Stellungen über eine geringere und eine grössere Druckkraftstufe verfügt, weiterhin in der Fernschalteinheit /7, 56/ in Wahlrich tung /v/ so viele Signalgeber /EV12, EV34, EV56, EVR/ angeordnet sind, wie die Anzahl der Schaltstrassen /1-2$^x$, 3-4$^x$, 5-6$^x$, R$^x$/ ist, und in Schaltrichtung /k/ mindestens symmetrisch zur Mittelstellung je zwei Signalgeber /64, EKK1, EKS1, EKS2, EKK2/ angeordnet sind, von denen die der Mittelstellung näher liegenden Signalgeber /64, EKS1, EKS2/ mit den in den äusseren Stellungen des Schaltzylinders /35/ geringere Druckkraftstufe zustandebringenden Ventilen /SK0-SK1, SK0-SK2/ in Steuerungsverbindung stehen und die von der Mittelstellung ferner liegenden Signalgeber /64, EKK1, EKK2/ mit den in den äusseren Stellungen des Schaltzylinders /35/ grössere Druckkraftstufe zustandebringenden Ventilen /SK1, SK2/ in Steuerungsverbindung stehen, weiterhin der Schaltzylinder /35/ mit mindestens je einem, die Endstellung signalisierenden Signalgeber /P1, P2, ES0/ versehen ist, und schliesslich in der Fernschalteinheit /7, 56/ der Fernschalthebel /12, 58/ mit einer mittels Hilfsenergie betätigten Brems-Befestigungskonstruktion /F/ in Zwangsverbindung steht, wobei mit der Brems-Befestigungskonstruktion /F/ die in der Fernschalteinheit /7, 56/ in Schaltrichtung /k/ angeordneten Signalgeber /18, EK1, EK2, 64, EKK1, EKS1, EKS2, EKK2/ und die die Endstellung des Schaltzylinders /35/ signalisierenden Signalgeber /P1, P2, ES0/ in Steuerungsverbindung stehen.

2. Vorrichtung nach Anspruch 1, **dadurch gekennzeichnet,** dass die in der Fern schalteinheit /7/ in Schaltrichtung /k/ angeordneten Signalgeber in einer, mit dem Fernschalthebel /12/ in Betätigungsverbindung stehenden Signalgebereinheit /63, 18/ ausgebildete Öffnungen /54/, zweckmässig Spalten /20/ sind, deren Bewegungsbahnen /p1/ zusammenfallen, und in dieser Bewegungsbahn /p1/ mindestens zwei, auf Lichtwirkung elektrische Signale erzeugende Fühler /EK1, EK2/ vor den Öffnungen /54, 20/ angeordnet sind, die Sichtbereiche /f/ der Fühler /EK1, EK2/ im Vergleich zueinander zweckmässig um das 0,5-1-fache des Sichtbereiches /f/ verschoben sind, weiterhin mit dem Fernschalthebel /12/ eine weitere Signalgebereinheit /18/ in Betätigungsverbindung steht, in welcher eine einzige Öffnung /55/, zweckmässig Spalte /19/ ausgebildet ist, vor welcher ein in Mittelstellung des Fernschalthebels /12/ auf Lichtwirkung elektrische Signale erzeugender Fühler /EK0/ angeordnet ist.

3. Vorrichtung nach Ansprüchen 1 oder 2, **dadurch gekennzeichnet,** dass die mit dem Fernschalthebel /12/ in Betätigungsverbindung stehende, mit mehreren Öffnungen /54, 20/ und mit einer einzigen Öffnung /55, 19/ versehene Signalgebereinheit /18/ aus einem Stück ausgebildet ist und die Bewegungsbahn /p2/ dieser letzterwähnten einzigen Öffnung /55, 19/ ausserhalb der Bewegungsbahn /p1/ der anderen Öffnungen /54, 20/ fällt.

4. Vorrichtung nach einem der Ansprüche 1 bis 3, **dadurch gekennzeichnet,** dass die durch den Fernschalthebel /12/ betätigte Signalgeber einheit /18/ mindestens so lang /l/ ist, wie der Abstand /L/ zwischen seinen zwei äusseren Stellungen, und in der ganzen Länge mit Öffnungen, zweckmässig Spalten /20/ versehen ist, deren Breite /s/ mit der Breite des Sichtbereiches /f/ des Fühlers /EK1, EK2/ identisch ist, weiterhin ihre Teilung /o/ das Doppelte ihrer Breite /s/ ist, und weiterhin die in der Bewegungsbahn /p1/ dieser Öffnungen /20/ angeordneten zwei Fühler /EK1, EK2/ mit der Zählungsaufgabe versehenen Untereinheit der Steuereinheit /10/ in signalübertragender Verbindung stehen.

5. Vorrichtung nach einem der Ansprüche 1 bis 4, **dadurch gekennzeichnet,** dass die Brems-Befestigungskonstruktion /F/ der Fernschalteinheit /7, 56/ aus einer mit dem Fernschalthebel in Schaltrichtung /k/ in Zwangsverbindung stehenden Schleife /21, 65/ und einem Elektromagnet /M/ mit zur Reibfläche /26, 66/ der Schleife /21, 65/ senkrechter Wirkungslinie, oder einem pneumatischen Arbeitszylinder /68/ oder einem hydraulischen Arbeitszylinder besteht, und die durch den Elektromagnet /M/ oder den pneumatischen Arbeitszylinder /68/ oder den hydraulischen Arbeitszylinder an der Reibfläche /26, 66/ der Schleife /21, 65/ erweckte Reibkraft geringer ist als die durch auf die Schleife /21, 65/ am Fernschalthebel /12, 58/ ausgeübte Handrkaft wirkende Kraft.

6. Vorrichtung nach einem der Ansprüche 1 bis 5, **dadurch gekennzeichnet,** dass an der Schleife /21, 65/ der Brems-Befestigungskonstruktion /F/ der Fernschalteinheit /7, 56/ zwei Anstossflächen /25, 73/ ausgebildet sind, zwischen welchen der Fernschalthebel /12/ oder der damit in Zwangsverbindung stehende Anschlag /72/ angeordnet ist, weiterhin der Abstand /u/ zwischen den Anstossflächen /25, 73/ grösser ist als die Abmessung des Fernschalthebels /12/ oder des Anschlags /72/ zwischen den Anstossflächen /25, 73/, und der Fernschalthebel /12/ oder der Anschlag /72/ in Richtung der Anstossflächen /25, 73/ mittels zwei Federn /23, 24, 75/ gleicher Federkraft gegen die Schleife /21, 65/ ausgestützt ist.

7. Vorrichtung nach einem der Ansprüche 1 bis 6, **dadurch gekennzeichnet,** dass die die Mittelstellung des Schaltzylinders /35/ zustandebringenden aktiven Kolbenflächen /AK/ geringer sind als die die äussere Stellung zustandebringenden aktiven Kolbenflächen /AS/.

8. Vorrichtung nach einem der Ansprüche 1 bis 6, **dadurch gekennzeichnet,** dass zwischen dem den die Mittelstellung des Schaltzylinders /35/ zustandebringenden Zylinderraum mit Pressluft versorgenden Ventil und der Pressluftquelle ein Druckminderer zwischengeschaltet ist.

9. Vorrichtung nach einem der Ansprüche 1 bis 8, **dadurch gekennzeichnet,** dass in Mittelstellung jeder Zylinderraum /V0, V1, V2/ des Schaltzylinders /35/ mit der Pressluftquelle verbunden ist.

10. Vorrichtung nach einem der Ansprüche 1 bis 9, **dadurch gekennzeichnet,** dass die Kolbenstange /36/ des Schaltzylinders /35/ mit einem Signalgeber in Zwangsverbindung steht, in dessen Bewegungsrichtung die Höhe der mittleren Strecke /P0/ von seinen drei Strecken /P0, P1, P2/ von der Höhe der anderen zwei Strecken /P1, P2/ abweicht, und vor dem Signalgeber ein Fühler /ES0/ angeordnet ist, und mindestens in je einer äusseren Stellung des Schaltzylinders /35/ je eine äussere Strecke /P1, P2/ des Signalgebers vor dem Fühler /ES0/ ist.

11. Vorrichtung nach einem der Ansprüche 1 bis 10, **dadurch gekennzeichnet,** dass jeder Stellung des Wahlzylinders /34/ ein Signalgeber /ES12, ES34, ES56, ESR/ zugeordnet ist, und von diesen Signalgebern /ES12, ES34, ES56, ESR/ und von den in der Fernschalteinheit /7, 56/ in Wahlrichtung /v/ angeordneten Signalgebern /EV12, EV34, EV56, $\overline{\mathrm{EVR}}$/ die zu den gleichen Schaltstrassen /1-2$^x$, 3-4$^x$, 5-6$^x$, R$^x$/ gehörenden miteinander in, die Gangstufenschaltung zulassender Verbindung stehen.

Fig.1

Fig.2

Fig.3

EP 0 371 159 A1

Fig.4

Fig.6

Fig.5

Fig.7

EP 0 371 159 A1

Fig. 8

Fig.9

~44

IC5

| A | Q A | —128 |
| B | Q B | —129 |
| C | Q C | —130 |
| D | Q D | —131 |

CI        CO

126 —— >CLK
          PE_
127 —— B/D̄
          U/D̄

IC6

A    QA
B    QB
C    QC
D    QD

CI        CO      —132

123 —— >CLK
          PE_
          B/D̄     —136
          U/D̄

IC6

Fig. 10

Fig.11

EP 0 371 159 A1

Fig.12

Fig.13

Fig.14

Fig.15

Fig.21

Fig.16

EP 0 371 159 A1

Fig.17

Fig.18

Fig.19

Fig.20

Europäisches Patentamt

**EUROPÄISCHER RECHERCHENBERICHT**

Nummer der Anmeldung

EP    88 11 9837

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0291964 (CSEPEL AUTOGYAR)<br>* das ganze Dokument * | 1 | F16H61/28<br>B60K41/22 |
| A | | 5, 7 | |
| A | DE-A-1480326 (TURNER)<br>* Seite 1, Zeile 12 - Seite 2, Zeile 4 *<br>* Seite 5, Zeile 1 - Zeile 12 *<br>* Seite 7, Zeile 15 - Seite 14, Zeile 18 *<br>* Figuren 1, 6-9, 12, 13 *<br>--- | 1, 9 | |
| A | EP-A-0108572 (ISUZU)<br>* Seite 1, Zeile 5 - Zeile 7 *<br>* Seite 6, Zeile 6 - Seite 7, Zeile 1 *<br>* Seite 9, Zeile 20 - Seite 11, Zeile 3 *<br>* Seite 16, Zeile 15 - Seite 19, Zeile 7 *<br>* Figuren 1-4 *<br>--- | 1, 9 | |
| A | FR-A-2581002 (JIDOSHA KIKI)<br>* Seite 1, Zeile 3 - Seite 2, Zeile 18 *<br>* Seite 7, Zeile 33 - Seite 8, Zeile 33 *<br>* Ansprüche 1-3; Figuren 1, 2, 4, 9, 14 *<br>--- | 1, 9, 10, 11 | |
| A | DE-A-3613800 (WABCO WESTINGHOUSE)<br>* Spalte 2, Zeile 56 - Spalte 3, Zeile 55 *<br>* Figur 1 *<br>--- | 1, 5, 9, 10, 11 | **RECHERCHIERTE SACHGEBIETE (Int. Cl.5)**<br><br>F16H<br>B60K |
| A | US-A-4610179 (PARKER)<br>* das ganze Dokument *<br>----- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 07 JULI 1989 | CLASEN M.P. |